# EUROPEAN PATENT APPLICATION

(11) **EP 4 818 876 A1**
(43) Date of publication of application: **07.10.2026**
(21) Application number: 24911124.6
(22) Date of filing: 24.12.2024
(51) Int. Cl.: G06F 3/06

(54) **STORAGE MANAGEMENT METHOD AND RELATED APPARATUS**

(30) Priority: 26.12.2023 CN 202311814043
(71) Applicant: Huawei Technologies Co., Ltd., Shenzhen, Guangdong 518129 (CN)
(72) Inventor: LAN, Longwen, Shenzhen, Guangdong 518129 (CN); XIAO, Yaowen, Shenzhen, Guangdong 518129 (CN); ZOU, Yanliang, Shenzhen, Guangdong 518129 (CN); SU, Yi, Shenzhen, Guangdong 518129 (CN); FANG, Wei, Shenzhen, Guangdong 518129 (CN); DUAN, Fangcheng, Shenzhen, Guangdong 518129 (CN)
(74) Representative: Epping - Hermann - Fischer
(86) International application number: PCT/CN2024/141874
(87) International publication number: WO 2025/140199

(57) **Abstract**

A storage management method and a related apparatus are provided, and are applied to the field of storage technologies. A storage management apparatus (20) obtains metadata of a first file system (10) from the first file system (10); and provides the metadata of the first file system (10) for a second file system (30), and causes data to flow between the first file system (10) and the second file system (30) through a storage interface provided by the first file system (10). The first file system (10) is a distributed file system. This application can implement metadata flow and data flow between the distributed file system and another file system, thereby resolving the data silo issue of the distributed file system and improve convenience of data access.

## Description

This application claims priority to Chinese Patent Application No. 202311814043.9, filed with the China National Intellectual Property Administration on December 26, 2023 and entitled "STORAGE MANAGEMENT METHOD AND RELATED APPARATUS", which is incorporated herein by reference in its entirety.

### TECHNICAL FIELD

This application relates to the field of storage technologies, and in particular, to a storage management method and a related apparatus.

### BACKGROUND

As the scale of user services expands, a single storage device can no longer satisfy service requirements. As a result, user service data may be stored on storage devices that support distributed storage. Data stored in storage devices needs to be organized by using a file system to facilitate access. To meet the requirements of distributed storage, distributed file systems have been developed. A distributed file system provides distributed storage services for data storage, and further provides unified metadata management services and unified data management services based on distributed storage. Although distributed file systems satisfy the distributed storage requirements of users they also introduce issues such as difficulties in data sharing and data flow. The data management services and the metadata management services of a distributed file system are relatively closed to external systems. As a result, data stored in the distributed file system is difficult to integrate with data stored in other locations, such as data in another file system, to form a unified file view. Consequently, the distributed file system deployed by the user is likely to become a data silo. In addition, the closed management architecture of the distributed file system makes data flow difficult, preventing users from easily decoupling from a specific distributed file system and limiting future evolution options.

### SUMMARY

This application provides a storage management method and a related apparatus, which can implement metadata synchronization and data flow between a distributed file system and another file system, thereby resolving the data silo issue of the distributed file system and improve convenience of data access.

According to a first aspect, this application provides a storage management method. The method includes: obtaining metadata of a first file system from the first file system, providing the metadata of the first file system to a second file system, and causing data to flow between the first file system and the second file system through a storage interface provided by the first file system. The first file system belongs to a distributed file system.

Optionally, the flowed data includes data that belongs to the first file system, so that a client of the second file system accesses the data that belongs to the first file system by using the second file system.

A metadata of a file system describes information (or referred to as an attribute) of a file in a file system and an association relationship between files. In this application, the metadata of the first file system is provided for the second file system, and the second file system may obtain information about a file in the first file system and an association between files by using the metadata of the first file system, so that a view of the file in the first file system can be established outside the first file system, to implement sharing of the metadata of the first file system. This application further implements data flow between the first file system and the second file system. The client of the second file system may access the data that belongs to the first file system by using the second file system, to improve data access convenience, so that a user does not need to deploy a plurality of clients to access different file systems. In addition, because the first file system belongs to the distributed system, in this application, data flow enables data to be migrated between the first file system and the second file system based on a requirement, so that the distributed file system can have more evolution options, thereby improving data layout flexibility.

In addition, in this application, data flow of the first file system is implemented through the storage interface provided by the first file system, so that the first file system can still maintain an original namespace internally, and this application does not cause an intrusive modification to the first file system. Therefore, in this application, data flow and metadata sharing with the distributed file system can be implemented in a non-intrusive manner, and a service implemented based on the first file system can still continue to be executed without interruption in a data flow process. This helps service stability and can significantly reduce implementation costs.

Optionally, the first file system and the second file system are heterogeneous file systems. In this case, data flow and metadata flow between the distributed file system and the heterogeneous file system can be implemented, to improve data access convenience and data layout mobility.

Or optionally, the first file system and the second file system are homogeneous file systems. For example, the second file system may also be a distributed file system, or even the first file system and the second file system are two distributed file systems of a same type. In other words, this solution is also applicable to two distributed file systems that are independently deployed, and can implement federation of a plurality distributed file systems, to improve data access convenience and data layout mobility.

In a possible implementation of the first aspect, the metadata of the first file system is used to generate a view of the first file system in the second file system. In the file view, a device and a service can display a hierarchy of a file system and file information, facilitating data access and flow performed by the user, which is easy for data management.

In some solutions, the second file system may provide the view including the file in the first file system to the client, and the client accesses the data of the first file system by using the view. In other words, in the foregoing implementation, a device (for example, the client of the second file system) other than the first file system also has a capability of performing data access on the distributed file system based on a file view.

In still another possible implementation of the first aspect, the method further includes: providing metadata of the second file system to the first file system, where the metadata of the second file system is used by the first file system to obtain a global file view, and the global file view includes a file view that belongs to the first file system and a file view that belongs to the second file system. In still another possible implementation of the first aspect, a format of the metadata obtained from the first file system is different from a format of the metadata provided for the second file system. In other words, the foregoing implementation supports conversion of a format of the metadata, to implement metadata flow between the first file system and another file system.

Optionally, content of the metadata may be the same or different. For example, format conversion may be performed on the metadata obtained from the first file system, to convert the metadata into a metadata format that can be identified by the second file system. Optionally, a new field (that is, an attribute of a file) may be added to a converted metadata format.

Further, after obtaining the metadata, the second file system may also perform format conversion on the metadata, to convert the metadata into a metadata format that can be identified by the second file system.

In still another possible implementation of the first aspect, the first file system includes a first storage apparatus and a metadata management apparatus, the first storage apparatus is configured to provide a data storage service for the first file system, and the metadata management apparatus is configured to manage the metadata of the first file system. In this case, the metadata of the first file system is obtained from the metadata management apparatus.

In still another possible implementation of the first aspect, the distributed file system includes at least one of the following file systems: a Lustre file system, a general parallel file system (general parallel file system, GPFS), a Hadoop distributed file system (Hadoop distributed file system, HDFS), a Ceph file system, a Swift file system, or the like.

For example, when the first file system is a Lustre file system, the first storage apparatus is an object storage server (object storage server, OSS) of the Lustre file system, and optionally includes an object storage target (object storage target, OST); and the metadata management apparatus is a metadata server (metadata server, MDS), and optionally includes a metadata storage target (metadata target, MDT).

Optionally, the storage interface may include a metadata obtaining interface, an input/output (input/output, IO, or I/O) interface, a migration interface, or the like. The migration interface is a hierarchical storage management (hierarchical storage management, HSM) interface.

In still another possible implementation of the first aspect, the second file system may be a distributed file system, a network file system (network file system, NFS), a file system based on a server message block (server message block, SMB) protocol, a common internet file system (common internet file system, CIFS), a simple storage service (simple storage service, S3), an object storage service (object storage service, OBS), or the like.

Optionally, when the second file system is also a distributed file system, the second file system and the first file system may be a same distributed file system, or may be distributed file systems of different types. For example, both the first file system and the second file system are Lustre file systems. In this case, the first file system and the second file system are homogeneous file systems. For another example, the first file system is a Lustre file system, and the second file system is a GPFS.

In still another possible implementation of the first aspect, the second file system is a file system in a global file system (global file system, GFS). For example, one or more storage devices (these storage devices may also be referred to as sites of the GFS) access the GFS, and file systems (also referred to as source file systems) are locally deployed on the storage devices. In this case, the second file system may be a local file system of the one or more storage devices.

In still another possible implementation of the first aspect, the obtaining the metadata of the first file system from the first file system includes: obtaining the metadata of the first file system through the storage interface provided by the first file system. In this case, the first file system provides the storage interface externally. In the foregoing implementation, the metadata of the first file system is obtained through the storage interface. In this way, metadata of the distributed file system can be obtained in a non-intrusive manner.

In some solutions, the first file system provides a metadata obtaining interface for a client, and the client may obtain the metadata of the first file system through the metadata obtaining interface. In this case, the foregoing implementation obtains the metadata of the first file system as the client through the storage interface provided by the first file system.

In still another possible implementation of the first aspect, the obtaining the metadata of the first file system through the storage interface provided by the first file system includes: scanning baseline metadata of the first file system through the storage interface provided by the first file system, to obtain the metadata of the first file system. The scanning refers to a manner of continuously obtaining metadata of several files in the first file system based on structural levels of a file system or based on specific data.

In still another possible implementation of the first aspect, the obtaining the metadata of the first file system from the first file system includes: obtaining change metadata of the first file system, where the change metadata is metadata added by the first file system in a time period, and the metadata of the first file system includes the change metadata. The foregoing implementation can obtain change metadata of the distributed file system can be obtained, and maintain metadata consistency.

In some solutions, production and consumption of the change metadata comply with a specific rule, for example, production and consumption are performed by using a message system or a bus system. In this case, the foregoing implementation supports obtaining the change metadata by using a subscription (or registration) message system or a bus system.

In still another possible implementation of the first aspect, the causing file data in the first file system to flow between the first file system and the second file system through the storage interface provided by the first file system includes: receiving a first data flow request from the second file system; and in response to the first data flow request, accessing the file data in the first file system through the storage interface. Further, the method further includes: feeding back an access result to the second file system, to enable the second file system to feed back the access result to the client of the second file system. The first data flow request is triggered when the client of the second file system accesses, by using the second file system, the file that belongs to the first file system.

The foregoing implementation implements data accessing by the second file system client for the first file system, to achieve an objective of sharing data with the distributed file system and improve use convenience for a user.

In still another possible implementation of the first aspect, the first data flow request is triggered when the client of the second file system reads, by using the second file system, the file data that belongs to the first file system. For ease of distinguishing, reading a first file is used as an example, and data of the first file is stored in the first file system. The accessing the file data in the first file system through the storage interface includes: reading the data of the first file from the first file system through the storage interface. The feeding back the access result to the second file system includes: providing the data of the first file to the second file system.

In the foregoing implementation, the client of the second file system can read the data that belongs to the first file system; and when the data is stored in the first file system, reads the file data from the first file system through the storage interface and then feeds back the data to the second file system.

In still another possible implementation of the first aspect, the first data flow request is triggered when the client of the second file system writes a file to the first file system by using the second file system. For ease of distinguishing, the following uses an example of writing a fifth file. The accessing the file data in the first file system through the storage interface includes: writing data of the fifth file to the first file system through the storage interface.

In the foregoing implementation, the client of the second file system can write the data of the fifth file to the first file system, and the data of the fifth file can be written to the first file system for storage by using the solution of the foregoing implementation, to implement writing of the first file system by an external device.

Further, the feeding back the access result to the second file system includes: receiving a write result fed back by the first file system, and feeding back the write result to the second file system. Optionally, the write result includes information indicating whether writing is successful, or the write result includes write information (for example, a write address and operation time).

Or optionally, the write result includes updated metadata of the fifth file. In this way, after the data of the fifth file is written, the metadata of the fifth file can be updated, to implement metadata consistency.

In still another possible implementation of the first aspect, the method further includes: receiving a first metadata update request from the second file system; and in response to the first metadata update request, submitting a second metadata update request to the first file system through the storage interface. The first metadata update request is triggered when the client of the second file system writes a file by using the second file system. For ease of understanding, a second file is used as an example for description, and the second file belongs to the first file system. The first metadata update request includes updated metadata of the second file, and the second metadata update request includes the updated metadata of the second file.

Further, the method further includes: feeding back a metadata update result to the second file system.

In the foregoing implementation, when the second file that belongs to the first file system is written, the file is directly written to the second file system, but the second file still belongs to the file in the first file system. Therefore, the metadata of the second file needs to be updated on a first file system side, to keep metadata consistency. In this way, the data that belongs to the first file system is written to the second file system, so that the data in the first file system may be gradually transferred to the second file system, to provide more selection directions for evolution of the distributed file system.

Optionally, data of the second file remains stored in the second file system after the metadata of the second file changes. In some solutions, the first file system has a requirement for archiving newly written data that belongs to the first file system locally. The foregoing implementation stores, in the second file system, newly written data that belongs to a distributed file, so that the data in the first file system can be gradually transferred to the second file system, to providing more selections for evolution of the distributed file system.

In still another possible implementation of the first aspect, the method further includes: intercepting a migration execution instruction from the first file system, to enable the data of the second file to be still stored in the second file system after the metadata of the second file is updated. The migration execution instruction indicates to migrate the second file to the first file system.

In this implementation, some distributed file systems need to migrate the newly written second file locally, for example, perform migration by using a third migration instruction. The foregoing implementation processes the third migration instruction, so that the data of the second file can still be stored in the second file system after the metadata of the second file is updated.

In still another possible implementation of the first aspect, the method is applied to a storage management apparatus. The storage management apparatus is further configured to store the metadata of the first file system. The method further includes: recording a change in the metadata of the second file in the locally stored metadata of the first file system.

In the foregoing implementation, the storage management apparatus may maintain the metadata of the first file system. This helps to ensure metadata consistency between the second file system, the first file system, and the storage management apparatus.

In still another possible implementation of the first aspect, the causing the file data in the first file system to flow between the first file system and the second file system through the storage interface provided by the first file system includes: receiving a second data flow request from the first file system; and in response to the second data flow request, obtaining the data of the second file from the second file system, and providing the data of the second file to the first file system through the storage interface, to enable a client of the first file system to obtain the data of the second file. The second data flow request is triggered when the client of the first file system accesses the second file.

In the foregoing implementation, the first file system may still retain a file access policy of the first file system, that is, the foregoing implementation implements compatibility with the first file system in a non-intrusive manner. When the client of the first file system needs to read the data of the second file stored in the second file system, the foregoing implementation can support archiving the data of the second file to the first file system, to implementing data consistency of all parties.

In still another possible implementation of the first aspect, the causing the file data in the first file system to flow between the first file system and the second file system through the storage interface provided by the first file system includes: sending a first migration indication to the first file system through the storage interface; receiving a first migration execution instruction from the first file system; and in response to the first migration execution instruction, obtaining data of a third file from the first file system and providing the data of the third file to the second file system. The first migration indication indicates to migrate out the data of the third file that is stored in and belongs to the first file system. Optionally, the first migration indication may include an identifier of the second file system to indicate to migrate the data of the third file to the second file system.

In the foregoing implementation, the data that belongs to the first file system may be migrated to the second file system, so that data migration between the first file system and the other file system is implemented, and more selection directions are provided for evolution of the first file system. From a perspective of the user, the foregoing implementation satisfies a unified management requirement for the other file system and the first file system, and improves user experience.

Optionally, when the first file system is a Lustre file system, the storage interface includes an HSM interface. In this way, the Lustre file system can archive data to an external device through tiered storage. The Lustre file system still considers that an external storage device is connected to a namespace system of the Lustre file system, and therefore, no intrusive modification is formed on a Lustre file system side. However, from a global perspective, the HSM interface provided by the Lustre file system implements data sharing and coexistence between two independent file systems. In still another possible implementation of the first aspect, the causing the file data in the first file system to flow between the first file system and the second file system through the storage interface provided by the first file system includes: sending a second migration indication to the first file system through the storage interface; receiving a second migration execution instruction from the first file system; and in response to the second migration execution instruction, obtaining data of a fourth file from the second file system and providing the data of the fourth file to the first file system. The second migration indication indicates to migrate, to the first file system, the data of the fourth file that is stored in the second file system.

In the foregoing implementation, data that is stored in the second file system may be migrated to the first file system, to implement data migration between the distributed file system and the other file system, provide more data layout possibilities for a storage system that includes a plurality of file systems, and improve user experience.

In still another possible implementation of the first aspect, the method further includes: receiving a migration policy from a data management apparatus, and generating a migration indication based on the migration policy, to trigger data flow between the first file system and a target file. In the foregoing implementation, data is migrated between the first file system and the other file system based on the migration policy delivered by the data management apparatus, so that the data migration can be controlled by the policy. This facilitates intelligent data management and improves user experience.

Optionally, the data management apparatus is connected to the second file system, or the data management apparatus is connected to the storage management apparatus. The foregoing method is implemented by the storage management apparatus.

For example, the data management apparatus is a data management engine (data management engine, DME).

According to a second aspect, this application further provides a data storage method, applied to a second file system and including: receiving metadata of a first file system provided by a storage management apparatus, and causing data to flow between the first file system and the second file system by using the storage management apparatus. The first file system belongs to a distributed file system.

Optionally, the flowed data includes data that belongs to the first file system. In this way, a client can access the data that belongs to the first file system.

Optionally, the first file system and the second file system are heterogeneous file systems. Or optionally, the first file system and the second file system are homogeneous file systems.

In a possible implementation of the second aspect, the method further includes: generating a file view based on the metadata of the first file system and providing the file view for the client, where the file view includes a view of a file in the first file system. The foregoing accessing is initiated by using the file view.

In still another possible implementation of the second aspect, the method further includes: generating a global view, where the global view includes a view of the first file system and a file view of the second file system. Optionally, the global view is generated based on the metadata of the first file system and metadata of the second file system.

In still another possible implementation of the second aspect, the causing the data that belongs to the first file system to flow between the first file system and the second file system by using the storage management apparatus includes: receiving an access request of a client of the second file system for the file that belongs to the first file system; and generating a first data flow request and sending the first data flow request to the storage management apparatus. Further, the second file system further receives an access result from the storage management apparatus, and feeds back the access result to the client of the second file system.

In still another possible implementation of the second aspect, the access request for the file that belongs to the first file system includes a read request for data of a first file that belongs to the first file system, the data of the first file is stored in the first file system, and the access result includes the data of the first file.

In still another possible implementation of the second aspect, the access request for the file that belongs to the first file system includes a write request for a fifth file that belongs to the first file system, and the first data flow request includes data of the fifth file. When the storage management apparatus feeds back the access result, the access result includes a write result of the fifth file.

In still another possible implementation of the second aspect, the method further includes: receiving a write request of the client for a second file that belongs to the first file system; and writing data of the second file to the second file system and sending a first metadata update request to the storage management apparatus, where the first metadata update request includes updated metadata of the second file.

The write request includes the data of the second file. Further, when the storage management apparatus feeds back a metadata update result, the method further includes: receiving the metadata update result.

In still another possible implementation of the second aspect, the causing the data that belongs to the first file system to flow between the first file system and the second file system by using the storage management apparatus includes: receiving data of a third file from the storage management apparatus, and storing the data of the third file. Optionally, the third file is migrated from the first file system and belongs to the first file system.

In still another possible implementation of the second aspect, the causing the data that belongs to the first file system to flow between the first file system and the second file system by using the storage management apparatus includes: providing data of a fourth file for the storage management apparatus to migrate the data of the fourth file to the first file system.

According to a third aspect, an embodiment of this application provides a storage system. The storage system includes a first file system, a storage management apparatus, and a second file system. The storage management apparatus is configured to implement the method described in any one of the implementations of the first aspect, and the second file system is configured to implement the method described in any one of the implementations of the second aspect. The first file system belongs to a distributed file system.

Optionally, the first file system and the second file system are heterogeneous file systems. Or optionally, the first file system and the second file system are homogeneous file systems.

In a possible implementation of the third aspect, the first file system includes a first storage apparatus and a metadata management apparatus, the first storage apparatus is configured to provide storage space for a file in the first file system, and the metadata management apparatus is configured to manage metadata of the first file system. The second file system includes a second storage apparatus, and the second storage apparatus is configured to provide storage space for a file in the first file system.

Optionally, the first storage apparatus and the second storage apparatus are heterogeneous storage apparatuses. For example, data organization modes of both are different.

In still another possible implementation of the third aspect, the second file system is configured to: receive an access request of a client of the second file system for a file that belongs to the first file system; and generate a first data flow request and send the first data flow request to the storage management apparatus. Further, the second file system is further configured to: receive an access result from the storage management apparatus, and feed back the access result to the client of the second file system.

In still another possible implementation of the third aspect, the access request for the file that belongs to the first file system includes a read request for data of a first file that belongs to the first file system, the data of the first file is stored in the first file system, and the access result includes the data of the first file.

In still another possible implementation of the third aspect, the second file system is further configured to: receive a write request of the client of the second file system for a second file that belongs to the first file system, write data of the second file to the second file system, and send a first metadata update request to the storage management apparatus, where the first metadata update request includes updated metadata of the second file. The write request includes the data of the second file.

According to a fourth aspect, this application provides a storage management apparatus. The storage management apparatus includes a metadata management module and a data flow module, the metadata management module is configured to obtain and provide metadata, and the processing module is configured to cause data to flow between a first file system and a second file system. The storage management apparatus is configured to implement the method described in any one of the first aspect or the possible implementations of the first aspect.

The first file system belongs to a distributed file system. Optionally, the flowed data may include data that belongs to the first file system.

For example, the metadata management module is further configured to maintain metadata of the first file system, for example, perform metadata format conversion, create a file view, update the metadata, and submit a change in the metadata.

For example, the data flow module may include a copy module and/or an LFS adaptation module. The copy module is configured to migrate data, for example, respond to a migration instruction. The LFS adaptation module is configured to initiate an I/O request, a migration request, or the like in a data access process, to implement data access and/or trigger data migration.

In a possible implementation of the fourth aspect, the storage management apparatus further includes a GFS access module, and the GFS access module is configured to access the GFS by using the storage management apparatus and the first file system as a source file system. When the second file system is a file system in a GFS, both the metadata flow process and the data flow process of the first file system and the second file system may pass through the GFS access module. Optionally, the storage management apparatus is further connected to a data management apparatus, to receive a migration (including tiering) policy from the data management apparatus. According to a fifth aspect, this application provides a storage device. The storage device includes a compute device and a storage disk connected to the compute device, and a second file system is deployed on the storage device. Connecting may be connecting through a wired line, or may be connecting through a wireless line. For example, the compute device and the storage disk are connected through a bus. For another example, the compute device and the storage disk are connected through a switch.

The storage device is configured to implement the data storage method described in any one of the second aspect or the possible implementations of the second aspect.

According to a sixth aspect, this application provides a compute device. The compute device includes a processor and a memory, the memory is configured to store computer instructions, and the processor is configured to execute the computer instructions stored in the memory, to enable the compute device to implement the method described in any one of the first aspect or the possible implementations of the first aspect, or implement the method described in any one of the second aspect or the possible implementations of the second aspect.

According to a seventh aspect, this application provides a computer-readable storage medium. The computer-readable storage medium is configured to store instructions or a computer program. When the instructions or the computer program is executed, the method described in any one of the first aspect or the possible implementations of the first aspect is implemented.

According to an eighth aspect, this application provides a computer-readable storage medium. The computer-readable storage medium is configured to store instructions or a computer program. When the instructions or the computer program is executed, the method described in any one of the second aspect or the possible implementations of the second aspect is implemented.

According to a ninth aspect, this application provides a computer program product. When instructions or a computer program is executed, the method described in any one of the first aspect or the possible implementations of the first aspect is implemented.

According to a tenth aspect, this application provides a computer program product. When instructions or a computer program is executed, the method described in any one of the second aspect or the possible implementations of the second aspect is implemented.

For beneficial effects of the solutions in the second aspect to the tenth aspect of this application, refer to the beneficial effects of the first aspect. Details are not described herein again.

### BRIEF DESCRIPTION OF DRAWINGS

FIG. 1 is a diagram of an architecture of a storage system according to an embodiment of this application;
FIG. 2 is a diagram of an architecture of another storage system according to an embodiment of this application;
FIG. 3 is a diagram of an architecture of another storage system according to an embodiment of this application;
FIG. 4 is a diagram of a GFS architecture according to an embodiment of this application;
FIG. 5 is a diagram of a global view according to an embodiment of this application;
FIG. 6 is a schematic flowchart of a storage management method according to an embodiment of this application;
FIG. 7 is a schematic flowchart of a method for a data flow process according to an embodiment of this application;
FIG. 8 is a diagram of a running scenario of a data flow process according to an embodiment of this application;
FIG. 9 is a schematic flowchart of another method for a data flow process according to an embodiment of this application;
FIG. 10 is a diagram of a running scenario of writing data according to an embodiment of this application;
FIG. 11 is a schematic flowchart of another method for a data flow process according to an embodiment of this application;
FIG. 12 is a diagram of a running scenario of reading data according to an embodiment of this application;
FIG. 13 is a schematic flowchart of another method for a data flow process according to an embodiment of this application;
FIG. 14 is a schematic flowchart of another method for a data flow process according to an embodiment of this application;
FIG. 15 is a diagram of a structure of a storage management apparatus according to an embodiment of this application; and
FIG. 16 is a diagram of a structure of a compute device according to an embodiment of this application.

### DESCRIPTION OF EMBODIMENTS

The following describes some terms used in embodiments of this application.
**1. File system:** The file system is a method (that is, a method for organizing files on a storage disk) and a data structure used to specify a file on a storage disk, such as a disk, a solid-state drive, or a partition. A main function of the file system is to enable a user to conveniently read and write files. For example, the user provides an identifier (for example, a name of a file or a path of the file) of the specified file to the file system, and the file system may store and fetch data of the specified file.

The file system may include the following file system types: a distributed file system, an NFS, an SMB, a CIFS, an S3, or an OBS. The distributed file system includes a Lustre file system, a GPFS, an HDFS, a Ceph file system, a Swift file system, or the like. File read and write are implemented through an access protocol of the file system. Different types of file systems usually use different access protocols.

The file system in this application is a system that has a tree hierarchy and that provides storage, fetching, and accessing services for a plurality of files. In some scenarios, a system having similar features may not be referred to as a file system. However, for ease of description, the system is referred to a file system in this specification. For example, when some object systems store objects, there is also a tree hierarchy between a plurality of objects, and this also falls within the scope of the "file system" in embodiments of this application. Optionally, for a file stored in the file system, data content of the file is generally unstructured data like data without a fixed structure, for example, a document, a picture, a video, or audio.

In some embodiments of this application, the file system is further used to indicate a node (or referred to as a site) on which the file system is deployed, or referred to as a node cluster of the file system. For example, a distributed file system is used to indicate a node where the distributed file system is deployed, and includes a compute node and/or a storage node.

**2. File, data, and metadata:** The file, also referred to as a computer file, is an information set. The file includes the data and the metadata. The data is data content of the file. The metadata is information describing the file, for example, a file name, a file size, and a file type. For example, a specific file system includes a file named "001.png", and the metadata of the file may describe a name (that is, "001.png"), a type, a size, a location, a creator, creation time, permission, or the like of the file.

In some implementations, the metadata can also describe an association relationship between files. For example, the metadata of the file includes an identifier of a directory file to which the file belongs, and a hierarchy of the file in the file system may be obtained by using the metadata of the file system.

**3. Heterogeneous file system:** "Heterogeneous" refers to a file system that has different access (and/or control) manners or different metadata formats. Usually, file systems of different types are usually heterogeneous file systems, and file systems provided by different providers are also usually heterogeneous file systems. Homogeneous file systems are opposite to the heterogeneous file systems. A global data access system may be implemented between the homogeneous file systems through unified metadata management and data access control.

**4. Distributed file system:** This is a file system that allows a computer to access a plurality of hosts through a network and share files. The distributed file system enables a plurality of users of a plurality of computers to share files and storage resources. A physical storage resource managed by the distributed file system is not necessarily directly connected to a local compute node, but is connected to the compute node through the network.

**5. GFS:** This is also referred to as a federated file system, and can combine a plurality of file systems and provide a combined view of the plurality of file systems, that is, a global file view. A user can load the global file view on any device to access file data on any storage device of the GFS based on the global file view. The GFS provides a unified file system namespace and global file view for applications across data processing systems (such as across data centers). A service application does not need to detect a data location, and the global file view from any device connected to GFS can be seen. When an application reads or writes a non-local file, the GFS loads data from a remote end to a local device. Local data and non-local data are not distinguished at an application level, a response speed depends on a network bandwidth and latency between devices. For example, in some solutions, a user deploys an NFS at a site A and deploys an S3 at a site B. The two sites can access the GFS. In this case, a device and a service that access the GFS can view, at any site, for example, a site C, a global file view of the NFS and the S3, and support in reading data of local and non-local files. From a perspective of the user, a plurality of file systems are a unified file system, which makes it possible to manage data on a plurality of storage devices in a unified manner. This greatly simplifies file management on the plurality of storage devices, and implements sharing, flow, and quick access of files on the plurality of storage devices.

**6. Migration and tiering:** Migration is a process of migrating data from one device (source device) to another device (destination device). Tiering, also referred to as tiered storage management, refers to a process of migrating data from one device (a source device) to another device (a destination device) and deleting the data from the source device. In the tiering process, the source device and the destination device are usually at different levels (or have different storage capabilities) and/or in different regions. For example, costs and/or data storage and fetching speeds of the source device and the destination device are different. For another example, the source device is a data center in a place A, and the destination device is a data center in a place B, in other words, the source device and the destination device belong to different data centers. For another example, the source device and the target device are in different regions and have different levels. For example, the source device is in a local data center and uses a solid-state drive (solid-state drive, SSD) as a storage disk, and the target device is in a cloud and uses a mechanical hard disk drive (hard disk drive, HDD) as a storage disk.

Generally, migration does not focus on how the source device subsequently processes data stored in the source device. However, tiering requires that the data stored in the source device is deleted to release storage space.

In some scenarios, migration and tiering can be replaced with each other. A data flow process is mainly described in this application, and the flow process is generated in both migration and tiering. Therefore, for ease of understanding, migration is uniformly used for description in this application. In other words, the migration described in this application includes tiering and/or migration.

**7. Ownership:** Metadata of a file may include ownership information. The ownership information is used to specify an ownership device of the file, for example, a storage device to which the file belongs. The ownership device of the file is configured to manage file data, including but not limited to one or more of maintaining latest complete data content of the file, releasing a data change when the file data changes, releasing a metadata change when the file metadata changes, or releasing data (for example, returning data to an application requesting data).

In some solutions, ownership may also be understood in a broad sense, in other words, a file system to which the file belongs. In a possible solution, ownership of the file may be determined by using a predefined rule. For example, a file written to a root directory of a first file system belongs to the first file system. The foregoing term descriptions may be applied to the following embodiments.

In comparison with another file system other than the distributed file system, data management and metadata management of the distributed file system are closed. As a result, a file stored in the distributed file system by a user cannot form a global view with a file in the other file system. This enables the distributed file system deployed by the user is also a data silo. With development of the GFS, it has become a trend to manage, in a unified manner, data of a plurality of file systems to form a unified global view, and cause data of a file system to flow between the plurality of file systems. In this case, when some data of the user is stored in the distributed file system, it is difficult for the data to flow with the other file system, preventing users from easily decoupling from a specific distributed file system and limiting future evolution options.

In view of this, embodiments of this application provide a storage management method and a related apparatus, which can implement metadata flow and data flow between a distributed file system and another file system, thereby resolving the data silo issue of the distributed file system and improve convenience of data access.

The following describes a possible system architecture to which this application is applicable. It should be understood that the system architecture provided below is an example system listed for ease of understanding of an application scenario of this solution. A person skilled in the art should understand that, with emergence of a new service scenario and a new system architecture, this application is also applicable to resolving a similar technical problem.

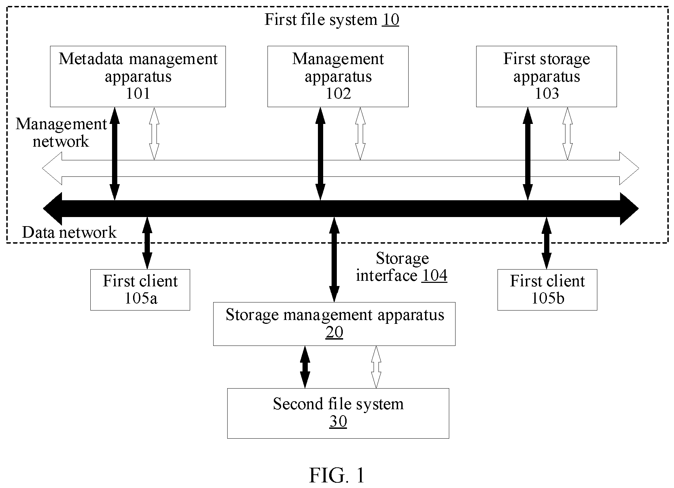

FIG. 1 is a diagram of an architecture of a storage system according to an embodiment of this application. The storage system includes a first file system 10, a storage management apparatus 20, and a second file system 30.

The first file system 10 is a distributed file system. In some possible designs, the first file system 10 includes a first storage apparatus 103 and a metadata management apparatus 101, and optionally further includes a management apparatus 102. The first storage apparatus 103 is configured to provide storage space to store file data in the first file system 10, the metadata management apparatus 101 is configured to manage metadata of the first file system 10, and the management apparatus 102 is configured to manage the data of the first file system 10. The first file system 10 further provides an interface (collectively referred to as a storage interface in this specification) externally, so that a client and an external device can interact with the first file system. The client of the first file system 10 is referred to as a first client for ease of distinguishing, and there may be one or more clients. FIG. 1 shows two possible first clients, that is, a first client 105a and a first client 105b. The external device herein refers to a device other than the metadata management apparatus 101, the management apparatus 102, the first storage apparatus 103, and the client of the first file system 10.

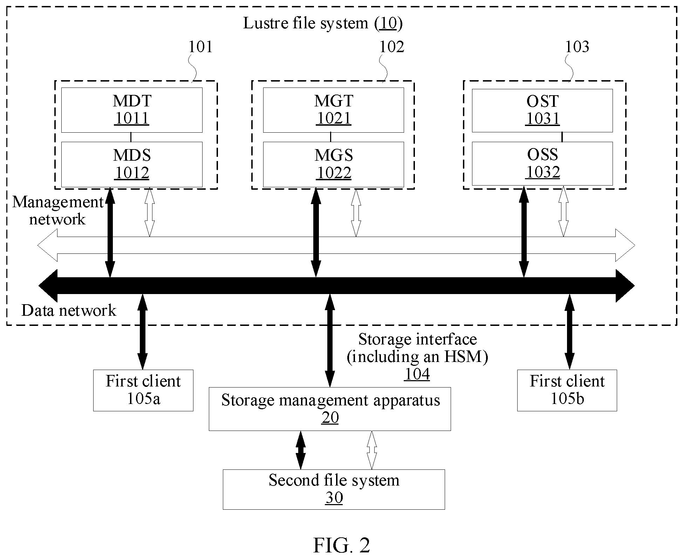

For example, the first file system 10 may be a Lustre file system, a GPFS, an HDFS, a Ceph file system, a Swift file system, or the like. The following describes the Lustre file system with reference to FIG. 2. The Lustre file system (considered as the first file system 10) shown in FIG. 2 includes parts such as a host application, a service, and persistence. The service includes one or more of an object storage server (object storage server, OSS) 1032, a metadata server (metadata server, MDS) 1012, a management server (management server, MGS) 1022, and the like. The OSS 1032 is configured to manage data storage, and provide a data storage service for the first client. The OSS 1032 is configured to provide a service related to metadata of the file system to the first client, including one or more of namespace management, file metadata maintenance, data distribution view maintenance, and the like. The MGS 1022 provides file system-level configuration management, such as management server (server) information. The persistence includes one or more of an object storage target (object storage target, OST) 1031, a metadata target (metadata target, MDT) 1011, a management target (management target, MGT) 1021, and the like. The OST 1031 is a storage device (for example, a block storage device) corresponding to the OSS 1032, the MDT 1011 is a storage device corresponding to the MDS 1012, and the MGT 1021 is a storage device corresponding to the MGS 1022. In some cases, with reference to FIG. 1, as shown in FIG. 2, the OSS 1032 and the OST 1031 may be considered as the first storage apparatus 103, the MDT 1011 and the MDS 1012 may be considered as the metadata management apparatus 101, and the MGS 1022 and the MGT 1021 may be considered as the management apparatus 102.

The storage management apparatus 20 is an apparatus having a storage capability, a computing capability, and a communication capability. The storage management apparatus 20 is separately connected to the first file system 10 and the second file system 30, and the connection herein refers to a channel having data transmission. For example, the storage management apparatus 20 can obtain data and/or metadata from the first file system 10. For another example, the storage management apparatus 20 may provide the data and/or the metadata for the second file system 30. There are a plurality of possible designs for deploying the storage management apparatus 20. In some solutions, the storage management apparatus 20 is independently deployed on a physical device (for example, a compute device in the following) or a physical device cluster. In some other solutions, the storage management apparatus 20 and the second file system 30 are deployed on a same physical device (for example, a compute device in the following) or a same physical device cluster. In some other solutions, the storage management apparatus 20 and the first file system 10 are deployed on a same physical device (for example, a compute device in the following) or a same physical device cluster.

The second file system 30 is another file system different from the first file system 10.

In a possible implementation, the second file system 30 is a file system that is heterogeneous to the first file system 10. In this case, a metadata format of the second file system 30 is different from a metadata format of the first file system 10, or an access control manner of the second file system 30 is different from an access control manner of the first file system 10. For example, the first file system 10 is a Lustre file system, and the second file system 30 is an NFS.

In still another possible implementation, the second file system 30 is a file system that is homogeneous to the first file system 10. For example, the first file system 10 is a specific Lustre file system, and the second file system 30 is another Lustre file system. In this case, this solution can be used to connect two distributed file systems that are separately deployed and that are homogeneous.

Optionally, the second file system 30 is deployed at a site of a GFS. For example, a specific storage device is connected to the GFS, and a local file system of the storage device is an NFS file system. In this case, the NFS file system may be considered as a second file system.

As mentioned above, the first file system 10 can provide a storage interface. The data in the first file system may be archived to an external device by accessing the first file system device or a service through the storage interface provided by the first file system 10. For example, the first file system is a Lustre file system, and the Lustre file system provides an HSM interface to implement data archiving.

In this embodiment of this application, with reference to FIG. 1, the first file system is a distributed file system and provides a storage interface, the storage management apparatus 20 is connected to the first file system 10 through the storage interface, and the storage management apparatus 20 is further connected to another storage device, for example, connected to the second file system 30. The second file system 30 and the first file system 10 are two independently deployed file systems. Therefore, the storage management apparatus 20 is connected to two different file systems. The storage management apparatus 20 may obtain the metadata of the first file system 10 and provide the metadata for the second file system 30. In addition, the second file system 30 also provides storage space. The storage management apparatus 20 may cause data to flow between the first file system 10 and the second file system 30 through the storage interface of the first file system. For example, data stored in the first storage apparatus 103 of the first file system 10 is migrated to the second file system 30 for storage. In some solutions, the second file system 30 includes a second storage apparatus, and the second storage apparatus may be configured to provide storage space to store data migrated from the first file system 10. The second storage apparatus includes a storage disk on which the second file system is deployed. For another example, data stored in the second file system 30 is migrated to the first file system 10 for storage.

It can be seen that, in this embodiment of this application, coexistence and mutual data flow of the distributed file system and the second file system 30 are implemented, so that the distributed file system is no longer a data silo. Because data between the first file system 10 and the second file system 30 may mutually flow, a device or a service can access data that belongs to the first file system by using the second file system, to improve data access convenience, so that a user does not need to deploy a plurality of clients to access different file systems. In addition, data flow enables data to be migrated between the first file system and the second file system based on a requirement, so that the distributed file system can have more evolution options, thereby improving data layout flexibility.

Moreover, in this application, data flow of the first file system is implemented through the storage interface provided by the first file system, so that the first file system can still maintain an original namespace internally, without requiring modification or adaptation to the first file system. From a perspective of the first file system 10, the storage management apparatus 20 is considered as a client that supports data tiering of the first file system 10. From a global perspective, the second file system 30 is another file system independent of the first file system 10, and the second file system 30 coexists with the first file system 10 through conversion of the storage management apparatus 20. Therefore, in this application, data flow and metadata sharing with the distributed file system can be implemented in a non-intrusive manner, and a service implemented based on the distributed file system can still continue to be executed without interruption in a data flow process. This helps service stability and can significantly reduce implementation costs of a storage system including a heterogeneous file system.

In some possible implementations, in the foregoing storage system, the client of the first file system 10 continues to access the first file system 10 by using an access protocol of the first file system 10, and the storage system supports the client of the first file system 10 in accessing all data, including data that is migrated to and stored in the second file system 30.

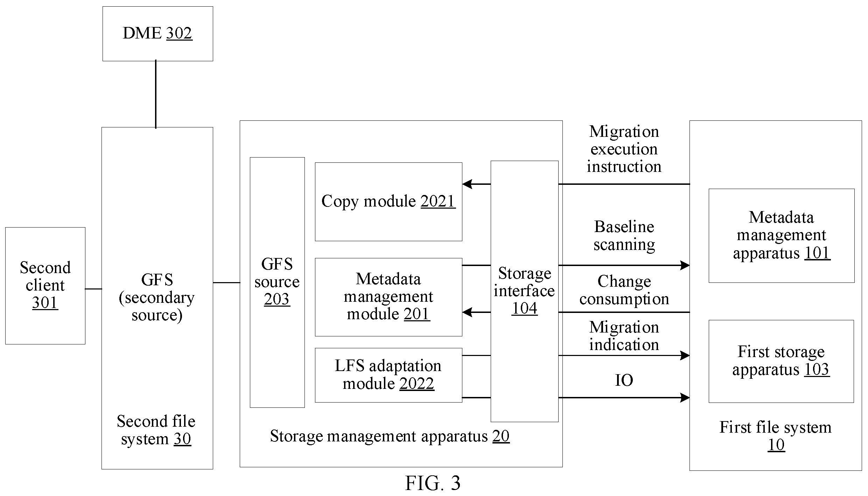

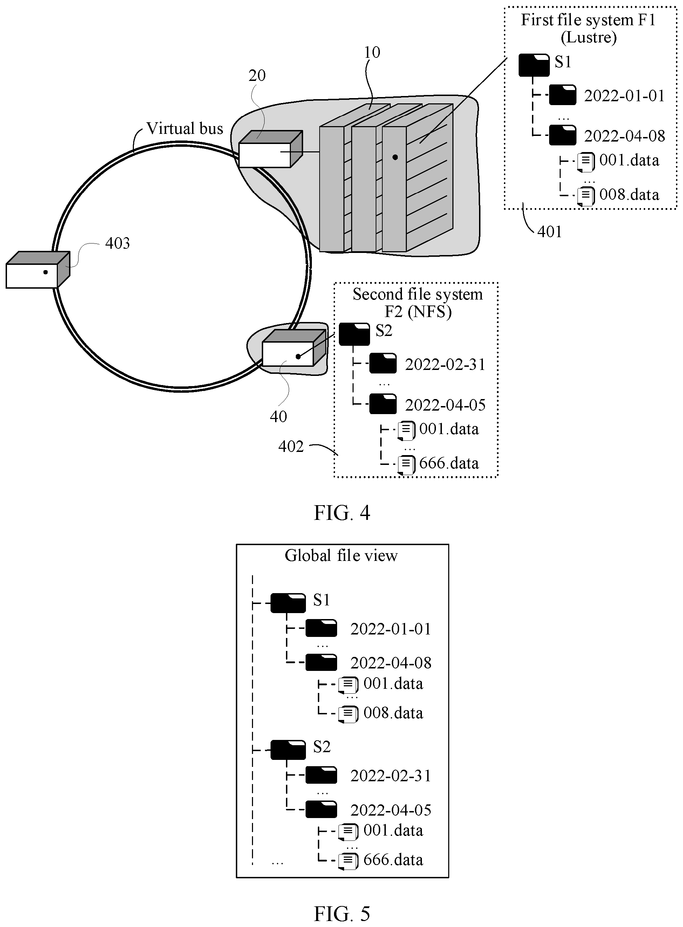

With reference to FIG. 3 and FIG. 4, the following continues to describe some possible implementations of the foregoing storage system. In the following descriptions, an example in which the second file system 30 is a source file system that accesses the GFS is used for description. However, this application is also applicable to a case in which the second file system is another file system that is independently deployed with the first file system 10.

In some possible implementations, as shown in FIG. 3, the storage management apparatus 20 includes a metadata management module 201. The metadata management module 201 is configured to store and maintain the metadata of the first file system 10, for example, metadata of a file that belongs to the first file system. Optionally, because the format of the metadata stored in the first file system 10 may be different from the format of the metadata of the second file system, the metadata management module 201 further supports conversion of the format of the metadata. In a possible solution, the metadata management module 201 may convert the format of the metadata into a specified format (for example, referred to as a first format). The first format may be preconfigured in the storage management apparatus 20 or may be set by another device (for example, a GFS or a data management apparatus). For example, the metadata obtained by the metadata management module 201 from the first file system 10 may be in a log format or a record format. In this case, the metadata management module may convert the obtained metadata into the first format. Further, the metadata management module 201 stores and maintains the metadata in the first format.

In a possible implementation, the storage management apparatus 20 may further perform format conversion for a plurality of times. For example, each site in the GFS may support metadata transfer in a specific metadata format (for example, referred to as a second format). In this case, the storage management apparatus 20 may convert the metadata in the first format into metadata in the second format, and provide the metadata in the second format for the GFS. Optionally, in this implementation, format conversion of the metadata may be further performed by a GFS source 203.

Optionally, the storage management apparatus 20 stores the metadata of the first file system 10. For example, the storage management apparatus 20 may have storage space, for example, a storage disk is disposed locally, or the storage management apparatus 20 is connected to an apparatus having storage space, where the storage space is used by the storage management apparatus 20 to store the metadata of the first file system 10. Further, the storage management apparatus 20 further supports updating metadata when the metadata changes, for example, adding a new metadata record to the change metadata.

In some possible implementations, with reference to FIG. 2, a storage interface 104 provided by the first file system 10 may also be referred to as a client interface, and may be an application programming interface (application programming interface, API). Optionally, the storage interface 104 includes one or more interfaces such as a metadata obtaining interface, an input/output (input/output, IO, or I/O) interface, or a migration interface. The following describes several storage interfaces by using examples.
(1) Metadata query interface: The interface is an interface used to query metadata of a file. The storage management apparatus 20 performs baseline scanning on the metadata of the first file system 10 through the metadata query interface, to obtain baseline metadata of the first file system 10. The scanning refers to a manner of continuously obtaining metadata of several files in the first file system 10 based on structural levels of a file system or based on specific data.
(2) Interface for consuming metadata changes: The storage management apparatus 20 consumes metadata changes of the first file system 10 through the interface for consuming metadata changes.
(3) Interface for producing metadata changes: The storage management apparatus 20 submits metadata changes to the first file system 10 through the interface for producing metadata changes.
(4) Input/output (input/output, IO, or I/O) interface: The interface is configured to access file data in the first file system 10. The storage management apparatus 20 accesses the file data in the first file system 10 through the I/O interface. The access herein includes reading and/or writing data.
(5) Data migration interface: The interface is used for data migration, for example, the HSM interface provided by the Lustre file system.

Certainly, functions and names of the foregoing interface are merely examples. In some implementations, the first file system 10 may further provide more interfaces or fewer interfaces (for example, a metadata change interface is not provided). In some other implementations, a name of an interface used to implement a corresponding function may have another design, and the foregoing name is merely an example.

In some possible implementations, with reference to FIG. 3, the storage management apparatus 20 includes a copy module 2021. The copy module 2021 is configured to implement migrating file data between the first file system 10 and the second file system 30.

In some possible implementations, the storage management apparatus 20 includes a local file system (local file system, LFS) adaptation module 2022. The LFS adaptation module 2022 is configured to implement interface conversion, and is configured to adapt to the storage interface of the first file system herein.

In some possible implementations, when the second file system 30 is a GFS, the storage management apparatus 20 further includes a GFS access module, for example, the GFS source 203 shown in FIG. 3. The GFS access module is configured to access the GFS by using the storage management apparatus 20 and the first file system 10 as a source file system.

In some possible implementations, the second file system 30 may be connected to one or more clients. For ease of distinguishing, a client of the second file system 30 is referred to as a second client. FIG. 3 shows a possible second client 301. The second client 301 can initiate access to data in the GFS.

In some possible implementations, the metadata of the first file system is used to generate a view of the first file system in the second file system. In the file view, a device and a service can display a hierarchy of a file system and file information, facilitating data access and flow performed by the user, which facilitate file sharing, movement, and quick access on a plurality of different devices.

In some possible implementations, the second file system 30 is further configured to generate a global view, for example, generate the global view based on the metadata of the first file system 10 and the metadata of the second file system 30.

In some possible implementations, the storage management apparatus is further configured to provide the metadata of the second file system 30 for the first file system 10, where the metadata of the second file system 30 is used by the first file system 10 to obtain a global file view, and the global file view includes a file view that belongs to the first file system and a file view that belongs to the second file system.

The following describes an example of a GFS architecture and an example of a global file view.

FIG. 4 is a diagram of an architecture of a GFS according to an embodiment of this application. The GFS may be considered as a storage system, and combines a first file system F1 (a root directory of the first file system is represented by S1) and a second file system F2 (a root directory of the second file system is represented by S2). The first file system F1 is a Lustre file system (only an example), and a file that belongs to the first file system F1 and a hierarchy thereof are shown in an area 401; and the second file system F2 is an NFS (only an example), and a file that belongs to the second file system F2 and a hierarchy thereof are shown in an area 402. The first file system F1 (considered as the first file system 10) accesses the GFS by using the storage management apparatus 20, and the second file system F2 (considered as the second file system 30) is deployed in a storage device 40 (in other words, the second file system F2 is a local file system of the storage device 40) and accesses the GFS by using the storage device 40. The GFS may combine the first file system F1 and the second file system F2, and a global file view obtained by combining the first file system F1 and the second file system F2 is shown in FIG. 5. A GFS device or service, for example, the storage management apparatus 20 shown in FIG. 4, the storage device 40, and the device (or service) 403 shown in FIG. 4, is accessed, and the global file view shown in FIG. 5 can be viewed. With reference to FIG. 5, the global file view includes a view of the file in the first file system F1.

Further, the GFS supports access to data in the first file system by using the view. In other words, in this application, a device (for example, a device or a service that accesses the GFS) outside the first file system also has a capability of performing data access on the first file system based on the file view. Still refer to FIG. 4 and FIG. 5. After the device or the service loads the global file view, a user is able to access file data located on any device in the GFS. For example, the user loads the global file view on the device (or service) 403, and may read data of files in the first file system F1 and/or the second file system F2, or write data to the first file system F1 and/or the second file system F2. Optionally, when the user accesses a specific file in the GFS by using the device (or the service), if the read data is non-local data, the data needs to be loaded locally from a remote end. For example, if a user of the storage device 40 needs to read 001.data of a directory S1, the GFS requests to load the data to the storage device 40 (or the second file system F2), to facilitate reading of the user.

It should be noted herein that, because the second file system F2 accesses the GFS, a device or a service that accesses the GFS may be considered as a client of the second file system F2, for example, the device (or service) 403 may also be considered as a client of the second file system F2.

In some possible implementations, the GFS may further be connected to a data management apparatus, for example, a DME shown in FIG. 3, and is configured to deliver a data migration (or tiering) policy, to support data in the GFS to flow based on a policy or based on a requirement.

In some possible implementations, the GFS provides a message bus, and the message bus is configured to transfer a message between devices. For example, the message bus may be configured to update metadata of a file system between devices. Optionally, the message bus implements a function of the message bus by using a network across devices.

In some possible implementations, the GFS further provides a data flow bus, configured to cause data to flow between devices based on a policy or on demand. Optionally, the data flow bus implements a function of the data flow bus by using a network across devices.

The foregoing message bus and/or data flow bus are/is a virtualized bus, or referred to as a virtual bus, as shown in FIG. 4.

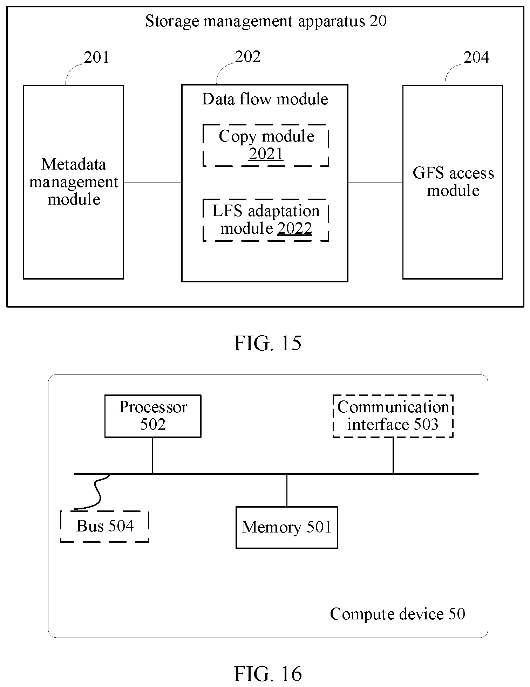

The descriptions of the storage management apparatus 20 herein may be further combined with the following descriptions of the storage management apparatus 20 shown in FIG. 15.

The following describes a method provided in embodiments of this application.

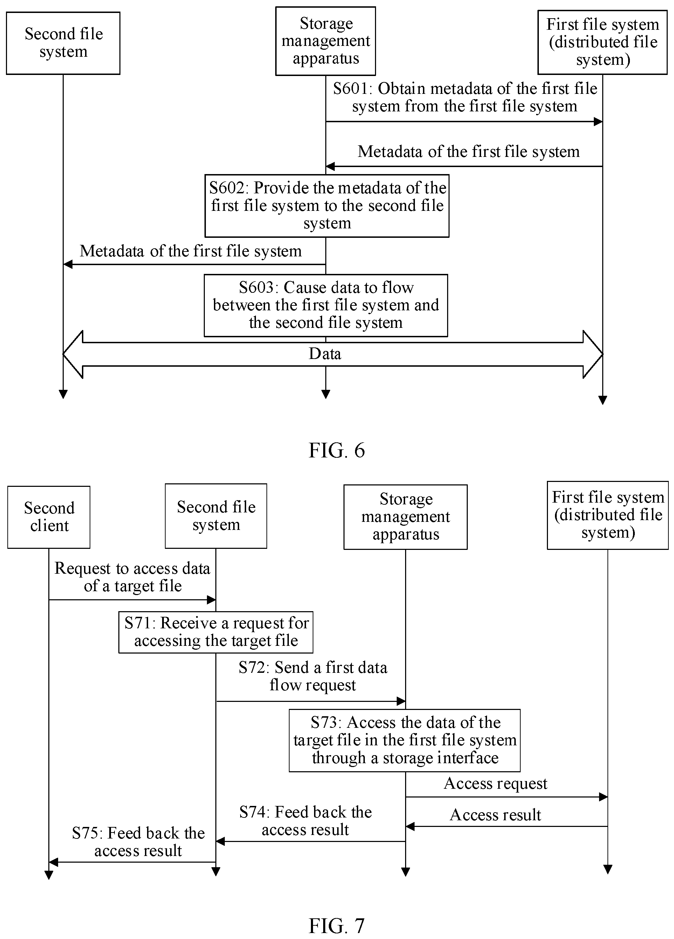

FIG. 6 shows a storage management method according to an embodiment of this application. Optionally, the method may be applied to a storage system, for example, one or more storage systems in FIG. 1 to FIG. 4. The storage management method shown in FIG. 6 may include one or more steps in step S601 to step S603. It should be understood that, for ease of description, a sequence of step S601 to step S603 is used for description herein, but this is not intended to constitute a limitation that the method is necessarily performed in the foregoing sequence. An execution sequence, execution time, a quantity of execution times, and the like of the foregoing one or more steps are not limited in embodiments of this application. Step S601 to step S603 are specifically as follows.

Step S601: A storage management apparatus obtains metadata of a first file system from the first file system.

The storage management apparatus is an apparatus having a storage capability, a computing capability, and a communication capability, for example, the foregoing storage management apparatus 20. The storage management apparatus is separately connected to the first file system and a second file system. The first file system is a distributed file system. For example, the first file system is a Lustre file system, a GPFS, an HDFS, a Ceph file system, or a Swift file system. A target file may be a distributed file system, an NFS, a file system based on an SMB protocol, a CIFS, a S3, an OBS, or the like. The first file system and the second file system may be homogeneous or heterogeneous. For related descriptions, refer to the foregoing descriptions.

For example, the metadata of the first file system includes metadata of a file in the first file system, and the file herein includes a common file and a directory. The metadata is used to describe an identifier and an attribute of a file in the first file system. For example, the metadata includes an inode number, a size, last modification time, creation time, and the like of the file. Certainly, the identifier of the file may also be considered as an attribute of the file. In some solutions, the metadata is further used to describe a relationship between files. For example, the metadata of the file may include an identifier of a directory in which the file is located, or the identifier is referred to as a parent node identifier.

In some possible implementations, the storage management apparatus may store the metadata of the first file system. For example, the storage management apparatus has the storage capability, and can provide storage space to store the metadata of the first file system. Herein, having the storage capability may be that the storage management apparatus includes a storage disk, or the storage management apparatus is connected to a storage disk. Further, the storage management apparatus can manage the metadata of the first file system. The management herein includes saving, recording a change in the metadata, updating a file view, and the like. In this case, the metadata of the first file system is maintained in the first file system, and the storage management apparatus also locally maintains a copy of the metadata of the first file system.

In some possible implementations, the storage management apparatus may obtain the metadata through a storage interface provided by the first file system. For example, the first file system provides a metadata obtaining interface for a client, and the storage management apparatus may serve as a client of the first file system, and obtain the metadata of the first file system based on the metadata obtaining interface.

The metadata of the first file system may be stored in a plurality of manners, and the storage management apparatus may correspondingly obtain the metadata of the first file system in a plurality of manners. The following lists two methods for obtaining the metadata.

Manner 1: The storage management apparatus scans baseline metadata of the first file system through the storage interface provided by the first file system, to obtain the metadata of the first file system. The scanning refers to a manner of continuously obtaining metadata of several files in the first file system based on structural levels of a file system or based on specific data. In the first file system that has two metadata storage manners: baseline metadata and change metadata (or referred to as incremental metadata), the baseline metadata refers to metadata of the first file system stored in the first file system at a specific moment. In addition to the baseline metadata, the distributed file further maintains metadata updated based on the baseline metadata, that is, the change metadata. In a subsequent specific time period, the first file system may combine the change metadata into the baseline metadata to form baseline metadata of a new version. However, in the first file system in which no metadata storage manner of the incremental metadata is set, the baseline metadata is all metadata of a file in the first file system.

Manner 2: The storage management apparatus obtains change metadata of the first file system, where the change metadata is metadata added by the first file system in a time period, and the metadata of the first file system includes the change metadata. In some solutions, production and consumption of the change metadata comply with a specific rule, for example, production and consumption are performed by using a message system or a bus system. In this case, the foregoing implementation supports obtaining the change metadata by using a subscription (or registration) message system or a bus system.

For example, in the Lustre file system, the change metadata may be referred to as ChangeLog, and ChangeLog is recorded in an MDT. The storage management apparatus may be registered as a client that has change permission to consume metadata, and read ChangeLog by using a cursor, or read ChangeLog by using a command line, or read ChangeLog by using a bus system.

It should be understood that the foregoing two manners may be implemented at the same time. Further, Manner 2 may be periodically or aperiodically executed for a plurality of times, to ensure consistency of the metadata of the first file system.

In some possible implementations, the storage management apparatus may perform conversion on a metadata format. For example, after obtaining the metadata of the first file system, the storage management apparatus converts the metadata format into a metadata format supported by a GFS.

Metadata obtained after the format conversion is stored locally in the storage management apparatus, or is provided for the GFS. Further, a new field may be added in the process. For example, the metadata obtained after the format conversion includes one or more of the following fields: an inode (inode) number, a name (name), a type (type), a mode (mode), a snapshot identifier (snapid), a user identifier (uid), a user group identifier (gid), a size (size), a change action (action), a transaction identifier (tid), a soft link (linkto), creation time (ctime), modification time (mtime), last access time (access time, atime), a sequence number (sn), data information (datainfo), a standard extended attribute, an additional extended attribute, an access control list (acl), and the like. For example, fields such as the transaction identifier and the data information are newly added fields of the GFS.

Optionally, the format conversion of the metadata is performed by a metadata management module in the storage management apparatus, for example, the metadata management module 201 shown in FIG. 3.

In a possible solution, the second file system is a file system that accesses the GFS, and the storage management apparatus is configured to use the first file system as a source in the GFS, to implement accessing the first file system to the GFS. In other words, a storage system that includes the first file system, the second file system, and the storage management apparatus may be used as a GFS.

Step S602: The storage management apparatus provides the metadata of the first file system to the second file system.

The second file system is a file system that is different from the first file system. For example, the first file system is a Lustre file system, and the second file system is a file system such as a GFS, an NFS, or an S3. For another example, the first file system is a Lustre file system, and the second file system is another Lustre file system.

It should be understood that the storage management apparatus provides the metadata of the first file system to the second file system. Correspondingly, the second file system may receive the metadata of the first file system. Based on the metadata of the first file system, the second file system (including a client that accesses the second file system) may generate a view that includes the file of the first file system.

In some solutions, the second file system is a file system that accesses the GFS. In this case, a device or a service that accesses a global file system can obtain a global file view, and the global file view includes a view of a file that belongs to the first file system, as shown in FIG. 5. Optionally, the storage management apparatus may further submit a metadata change to the first file system and/or the second file system when the metadata changes. For example, when the client of the second file system updates metadata of the file that belongs to the first file system, the storage management apparatus obtains the updated metadata of the file and submits the updated metadata to the first file system, to maintain consistency between the metadata and the file view. Further, in a process of submitting the metadata change, the storage management apparatus may also convert the metadata change into a specified format and provide the specified format for a corresponding device. For example, when submitting the metadata change to the first file system, the storage management apparatus may convert the metadata change into metadata supported by the first file system and provide the metadata for the first file system.

Step S603: The storage management apparatus causes data to flow between the first file system and the second file system.

Optionally, the data herein includes data that belongs to the first file system. For example, data flow includes one or more of data migration, data reading, data access, or the like.

Optionally, the data flow is implemented through the storage interface provided by the first file system. The storage interface herein may include one or more of an I/O interface, a migration interface, and the like. For related descriptions, refer to the foregoing descriptions.

The following lists several possible data flow cases.

Case 1: Data flow caused by data access.

In a possible implementation, the second file system may initiate a first data flow request to the storage management apparatus, to request access to data stored in the first file system. The storage management apparatus accesses file data in the first file system through the storage interface. Data flow occurs during the process. As an example of data access, the client of the second file system accesses, by using the second file system, the file that belongs to the first file system, and the second file system generates the first data flow request and provides the first data flow request for the storage management apparatus. Correspondingly, the storage management apparatus receives the first data flow request from the second file system, and in response to the first data flow request, accesses the file data in the first file system through the storage interface. Further, the storage management apparatus further feeds back an access result to the second file system, to enable the second file system to feed back the access result to the client of the second file system.

In a possible implementation, for a write request, data that is written and belongs to the first file system may be stored in the second file system, and the storage herein is temporary storage or persistent storage. In this way, the data that belongs to the first file system is written to the second file system, so that the data in the first file system may be gradually transferred to the second file system, to provide more selection directions for evolution of the distributed file system. In addition, for the client of the second file system, data of a second file is written locally, so that processing efficiency of a write request is higher, a lower write delay can be implemented, and user experience is better.

Further, the storage management apparatus submits (or initiates) a change in the metadata to the first file system, so that the metadata is consistent with the file system. For example, when the client of the second file system writes the second file, the data of the second file may be stored in the second file system, but metadata of the second file, including attributes such as a file name, a size, write time, and a directory, may be provided for the first file system, so that the first file system can obtain latest metadata, to maintain consistency with the file view. In this way, the client of the first file system can learn the attributes of the newly written file in time, to improve user experience for a user.

In some possible implementations, data that is written and belongs to the first file system may be stored in the second file system, and the file data may be synchronously or asynchronously provided for the first file system, so that the first file system obtains full data content of the file that belongs to the first file system. For example, in some solutions, an owning device of a file needs to maintain full data content of the file, to maintain global consistency of the file data. Therefore, after the data of the file that is written is stored in the second file system, the first file system may obtain the file data, to obtain a full version of the data content of the file. However, a data flow process may be synchronous or asynchronous, to balance performance and consistency strength, and improve stability of the storage system.

For example, the client of the second file system requests to write the second file, and the second file belongs to the first file system. The second file system stores the data of the second file and sends a first metadata update request to the storage management apparatus, to update the metadata of the second file. The first metadata change request includes updated metadata of the second file. Correspondingly, the storage management apparatus receives the first metadata update request from the second file system, and in response to the first metadata update request, submits a second metadata update request to the first file system through the storage interface. The second metadata update request includes the updated metadata of the second file. Further, the storage management apparatus may further feed back a metadata update result to the second file system.

Optionally, when the storage management apparatus locally maintains the metadata of the first file system, the storage management apparatus may further record a change in the metadata of the second file in the locally stored metadata of the first file system.

In some solutions, the first file system has a requirement for archiving data that is newly written and belongs to the first file system locally. For example, in the Lustre system, when the data of the second file is stored in an external archiving device, if the metadata of the second file is updated, the Lustre system migrates the file back to an OST for storage. In a possible implementation, the data of the second file remains stored in the second file system after the metadata of the second file changes. The solution may be implemented in a plurality of manners. For example, archiving logic of the first file system is modified. For another example, the storage management apparatus may intercept a migration execution instruction from the first file system, so that the data of the second file remains stored in the second file system after the metadata of the second file is updated. The migration execution instruction indicates to migrate the second file to the first file system.

In a possible implementation, the first file system may initiate a second data flow request to the storage management apparatus, to request access to data of a file (the second file is still used as an example) stored in the second file system. The storage management apparatus may obtain the data of the second file from the second file system and provide the data for the first file system. Data flow occurs during the process. Correspondingly, the storage management apparatus receives the second data flow request from the first file system; and in response to the second data flow request, obtains the data of the second file from the second file system, and provides the data of the second file to the first file system through the storage interface, to enable the client of the first file system to obtain the data of the second file. The second data flow request is triggered when the client of the first file system accesses the second file. Optionally, the access request is a read request.

Case 2: Data flow caused by data migration. Optionally, data migration may be implemented by using a migration instruction. Optionally, the migration instruction is executed by a copy module in the storage management apparatus. In some solutions, data migration is implemented through the migration interface provided by the first file system, for example, an HSM interface provided by the Lustre file system.

In a possible implementation, data may be migrated from the first file system to the second file system. For example, the storage management apparatus may receive a first migration execution instruction from the first file system; and in response to the first migration execution instruction, obtain data of a third file from the first file system and provide the data of the third file to the second file system.

Optionally, the migration may be triggered by the storage management apparatus or triggered by the first file system. For example, in a case of the former, the storage management apparatus may send a first migration indication to the first file system. The first migration indication indicates to migrate out the data of the third file that is stored in and belongs to the first file system, for example, migrate the data to the second file system.

In still another possible implementation, the data may be migrated from the second file system to the first file system. For example, the storage management apparatus may receive a second migration execution instruction from the first file system, and in response to the second migration execution instruction, obtain data of a fourth file from the second file system and provide the data of the fourth file to the first file system.

Optionally, the migration is triggered by the storage management apparatus, or triggered by the first file system, or triggered by the second file system. For example, in a case of the former, the storage management apparatus may send a second migration indication to the first file system. The second migration indication indicates to migrate, to the first file system, the data of the fourth file that is stored in the second file system. For another example, the client of the second file system may obtain the global file view shown in FIG. 5. If permission permits, the client of the second file system may update an owning device of the fourth file from the second file system to the first file system.

Optionally, the fourth file may be a file that belongs to the distributed system but is temporarily stored (that is, temporarily stored) in the second file system. Therefore, the fourth file needs to be migrated to the first file system for storage. Or optionally, the fourth file is a file that belongs to the second file system, but needs to be migrated to the first file system for storage, and belongs to the first file system after the migration. In conclusion, the fourth file finally belongs to the first file system.

In a possible implementation, the storage management apparatus may migrate data between the first file system and a target file system based on a migration policy delivered by a data management apparatus, so that data migration can be controlled by the policy. This facilitates intelligent data management and improves user experience. For example, the storage management apparatus receives the migration policy from the data management apparatus, and generates a migration indication based on the migration policy, to trigger data flow between the first file system and the target file system.

In the embodiment shown in FIG. 6, the storage management apparatus provides the metadata of the first file system (distributed file system) for the second file system, and the second file system may obtain information about the file in the first file system and an association between files by using the metadata of the first file system, so that a view of the file in the first file system can be established outside the first file system, to implement sharing of the metadata of the first file system.

The storage management apparatus further causes the data that belongs to the first file system to flow between the first file system and the second file system, and implements coexistence of the distributed file system and another file system. The client of the second file system may access, by using the second file system, the data that belongs to the first file system, to improve data access convenience, so that a user does not need to deploy a plurality of clients to access different file systems. In addition, data flow enables data to be migrated between the first file system and the second file system based on a requirement, so that the distributed file system can have more evolution options, thereby improving data layout flexibility.

A plurality of possible implementations of data flow are described in the embodiment shown in FIG. 6. The following describes in detail some of the implementations with reference to FIG. 7 to FIG. 14.

FIG. 7 is a schematic flowchart of a method for a data flow process according to an embodiment of this application, including step S71 to step S75. It should be understood that, for ease of description, a sequence of step S601 to step S603 is used for description herein, but this is not intended to constitute a limitation that the method is necessarily performed in the foregoing sequence. An execution sequence, execution time, a quantity of execution times, and the like of the foregoing one or more steps are not limited in embodiments of this application. Step S71 to step S75 are specifically as follows.

Step S71: A second file system receives a request for accessing a target file.

The target file is a file that belongs to a first file system. The request may be from a client of the second file system, that is, a second client. The request includes a read request and/or a write request. As shown in FIG. 4, the second file system may be the file system F2 deployed on the storage device 40, and the client may be a client that accesses the storage device 40.

Optionally, the request may further include an identifier of the target file, for example, an inode number, a path, or an address. For example, the second client may obtain the global file view shown in FIG. 5, and request to read 001.data in a directory S2. The directory S2 is a root directory of the first file system, and 001.data is a file that belongs to the first file system. For another example, the second client may further write a new file, for example, the foregoing fifth file, to the directory S2, and the newly written fifth file belongs to a file in the first file system.

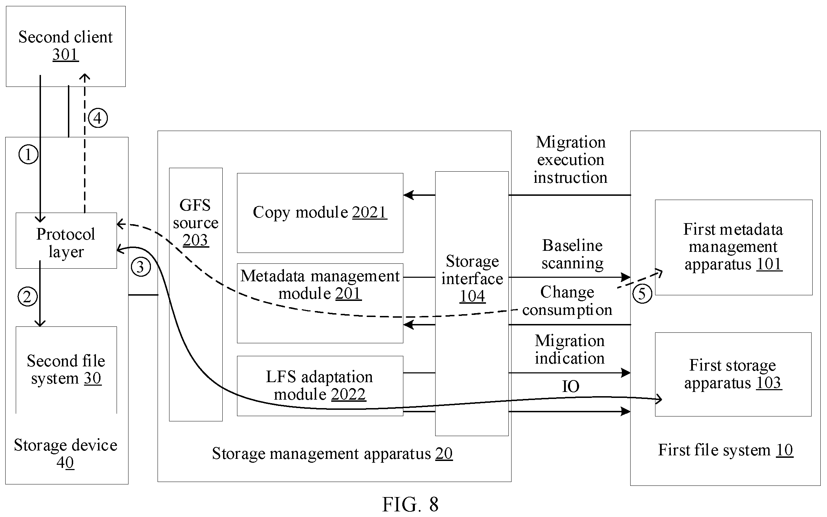

FIG. 8 is a diagram of a data access process according to an embodiment of this application. A second client 301 initiates an access request (that is, a solid line ① with an arrow shown in FIG. 8) to a first file system 10, and the access request is used to access a file that belongs to the first file system. A read request for reading a first file is used as an example. The first file is stored in the first file system 10, for example, stored in a first storage apparatus 103. Optionally, a second file system 30 belongs to a GFS. In this case, the read request of the client first arrives at a protocol layer. For the read request, the protocol layer first accesses a local file system (that is, the second file system 30), and determines whether data of the first file exists in the local file system (that is, a solid line ② with an arrow shown in FIG. 8). If the data of the first file does not exist, the data needs to flow.

Certainly, the access request may also be a write request. For example, the client requests to write data of the fifth file to the first file system 10, and the write request may include data content of the fifth file to be written.

Step S72: The second file system sends a first data flow request to a storage management apparatus. Correspondingly, the storage management apparatus receives the first data flow request from the second file system. Optionally, the first data flow request may include an identifier of a file, for example, an inode number, a path, or an address. The first data flow request is triggered when the client of the second file system accesses, by using the second file system, the file that belongs to the first file system. Refer to the access request process described in step S71.

Step S73: The storage management apparatus accesses data of the target file in the first file system through a storage interface.

For example, the target file is the first file, and the access request is a request for reading the first file. With reference to FIG. 8, the storage management apparatus reads the data of the first file through an I/O interface (as shown in ③ in FIG. 8), for example, reads data from the first storage apparatus 103.

Alternatively, for example, the target file is the fifth file, and the access request is a request for writing the fifth file. The storage management apparatus writes the data of the fifth file to the first file system through the I/O interface, for example, writes the data to the first storage apparatus 103. Optionally, the storage management apparatus may initiate an access request, and submit the access request to the first file system through the I/O interface. Optionally, the first file system may feed back an access result. For the read request, the access result carries an indication indicating whether reading is successful and/or data of a read file, for example, includes the data of the first file. For the write request, the access result may indicate whether writing is successful and information about a write file.

Step S74: The storage management apparatus feeds back the access result to the second file system. Optionally, for the read request, the storage management apparatus provides read data of the target file to the second file system. Further, the second file system may store the read data of the target file, and feed back the data of the target file to the second client.

Optionally, for the write request, writing the fifth file is used as an example. The first file system may feed back a write result to the storage management apparatus. Correspondingly, the storage management apparatus may receive the write result fed back by the first file system, and feed back the write result to the second file system. Optionally, the write result includes information indicating whether writing is successful, write information (for example, a write address and operation time), or the like.

Or optionally, the write result includes updated metadata of the fifth file. In this way, after the data of the fifth file is written, the metadata of the fifth file can be updated, to implement metadata consistency.

Step S75: The second file system feeds back the access result to the second client.

The second client includes the client of the second file system.

For the read request, the second file system may feed back read data to the client of the second file system, as shown in ④ in FIG. 8.

For the write request, the fed-back access result includes one or more of information that indicates whether writing is successful, write information, updated metadata of a file, and the like.

In a possible solution, content of the access result fed back by the second file system to the client of the second file system may be different from content of the access result that is received by the second file system from the storage management apparatus.

For example, after the second file system receives a request for writing a file from a user, the second file system first writes the file data locally, and in this case, may feed back a first write result to the client. When the file is subsequently provided for the first file system, the second file system may receive a second access result from the storage management apparatus. Herein, the first write result and the second write result may include different information. Certainly, this application is also applicable to a case in which the first write result and the second write result include same information.

Optionally, in a case of the write request, step S75 may be performed after step S71 and before step S74.

Optionally, the steps shown in FIG. 7 may be performed after a metadata change is obtained. Herein, a process of obtaining the metadata change includes: The storage management apparatus reads the latest metadata of the first file system through change consumption, and provides updated metadata of a distributed file system to the second file system, as shown in ⑤ in FIG. 8.

The data flow process shown in FIG. 7 and FIG. 8 implements data accessing by the client of the second file system accesses data for the first file system, to achieve an objective of data sharing and improve use convenience for a user.

FIG. 7 lists an access request process. In some possible implementations, for the write request, data that is written and that belongs to the second file system is stored in the second file system, and the storage management apparatus submits a change in metadata of a second file to the first file system.

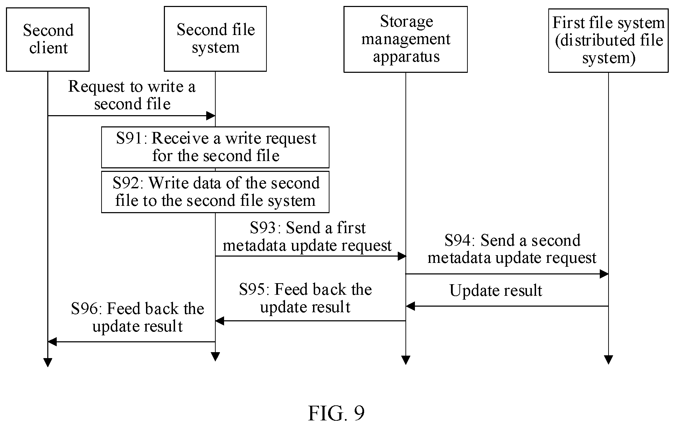

FIG. 9 is a schematic flowchart of another method for a data flow process according to an embodiment of this application, including step S91 to step S96. Details are as follows.

Step S91: A second file system receives a write request for a second file.

Optionally, the write request is initiated by a client of the second file system, for example, a second client. Optionally, the write request includes data of the second file.

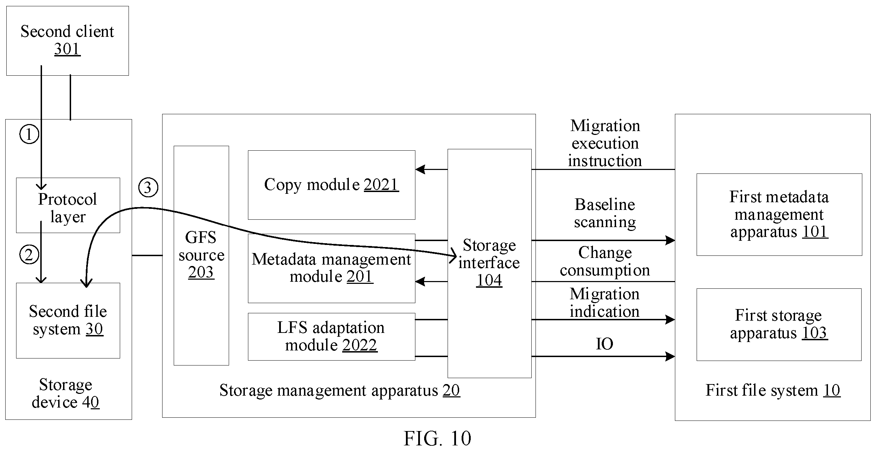

Refer to FIG. 10. FIG. 10 is a diagram of a running scenario of writing data according to an embodiment of this application. A second client 301 may initiate a write request (that is, a solid line ① with an arrow shown in FIG. 10) to a first file system 10, and the write request is used to write the second file. The write request carries data content of the second file.

Step S92: The second file system writes the data of the second file to the second file system.

Optionally, the second file system 30 belongs to a GFS. In this case, the write request of the client first arrives at a protocol layer, and then further arrives at the second file system (that is, ② shown in FIG. 10).

Step S93: The second file system sends a first metadata update request to a storage management apparatus, and correspondingly, the storage management apparatus receives the first metadata update request.

With reference to FIG. 10, when the second file system is a GFS or a site in a GFS, the first metadata update request may pass through a GFS access module and a metadata management module 201, as shown in ③ in FIG. 10.

After a file is written, its metadata is usually updated. For example, a new value is generated when attributes such as latest access time, creation time, and a data size are updated. The first metadata update request may include updated metadata of the second file. The metadata herein may include only an updated value, and a field that is not updated may be omitted to reduce resource consumption for storage and transmission.

Step S94: The storage management apparatus sends a second metadata update request to the first file system.

Optionally, the storage management apparatus may submit the second metadata update request through a storage interface 104.

The second metadata update request includes the updated metadata of the second file.

Optionally, the storage management apparatus further receives an update result fed back by the first file system. For example, the update result indicates whether updating is successful, or whether updating is successfully received.

Optionally, the method shown in FIG. 9 further includes step S95 and/or step S96, which are specifically as follows.

Step S95: The storage management apparatus feeds back the update result to the second file system. Correspondingly, the second file system receives the update result.

For example, the update result indicates whether updating is successful, or whether updating is successfully received.

Step S96: The second file system feeds back the update result to the second client. For example, the update result indicates whether updating is successful, or whether updating is successfully received.

In the data flow process shown in FIG. 9 and FIG. 10, a file that is newly written on a second file system side may be retained in the second file system, and file view consistency on a first file system side needs to be maintained only by updating metadata. In addition, for the client of the second file system, writing the data of the second file locally can achieve a lower write delay and better user experience.

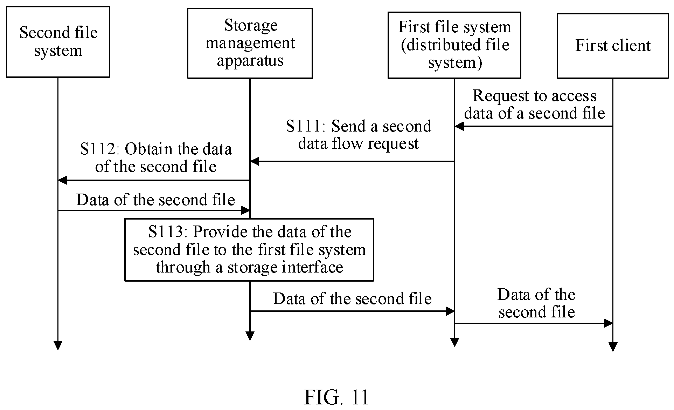

FIG. 11 is a schematic flowchart of another method for a data flow process according to an embodiment of this application, including step S111 to step S113. Details are as follows.

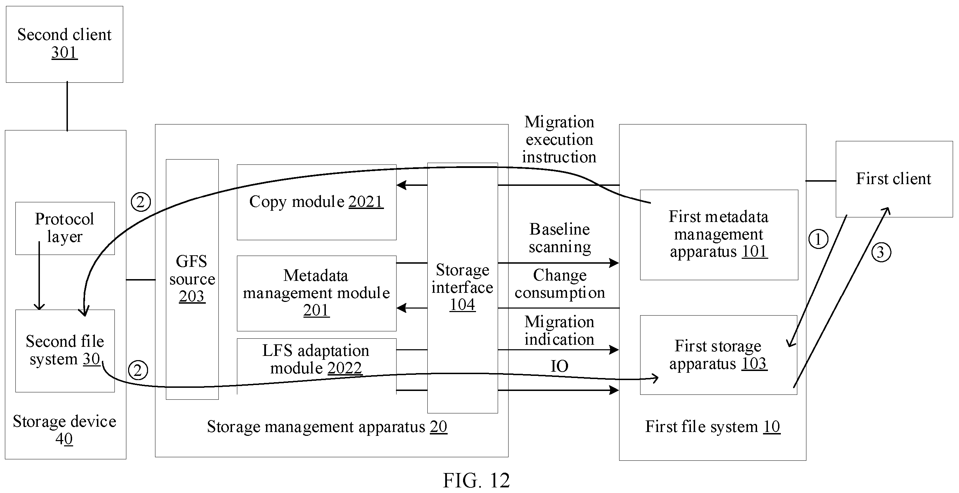

Step S111: A first file system sends a second data flow request to a storage management apparatus. With reference to FIG. 11 and FIG. 12, the second data flow request is triggered when a client (that is, a first client) of the first file system accesses a second file. The first client may initiate an access request for the second file, as shown in ① in FIG. 12.

Optionally, the request may be a read request, and data of the second file is stored in a second file system 30.

Step S112: The storage management apparatus obtains the data of the second file from the second file system.

In a possible implementation, with reference to FIG. 12, the first file system may send a migration execution instruction to a copy module 2021 by using a metadata management apparatus 101, to migrate the data of the second file locally (that is, a first storage apparatus 103 performs storage), as shown in ② in FIG. 12.

Optionally, with reference to FIG. 12, the storage management apparatus may pull the data of the second file from the second file system by using the copy module and a GFS source.

Step S113: The storage management apparatus provides the data of the second file to the first file system through a storage interface.

Optionally, the storage management apparatus may provide the data of the second file to the first file system through the storage interface (for example, an I/O interface), as shown in ② in FIG. 12.

Or optionally, the data of the second file may also be provided by the copy module 2021 for the first file system through the storage interface.

Further, the first file system feeds back the data of the second file to the first client, as shown in ③ in FIG. 12.

In the data flow process shown in FIG. 11 and FIG. 12, for data that is stored in the second file system, the client of the first file system may still read the data based on original read logic. From a perspective of the first file system, a storage management module is a client for tiering. The second file system is considered as an "archiving device" of the first file system, and belongs to a part of the first file system. However, the two file systems are actually two different file systems. In this embodiment, coexistence of the first file system and another file system is implemented, and the first file system does not need to be modified, so that a service of the first file system can be normally executed, and the client of the first file system can also continue to normally access a file in the first file system.

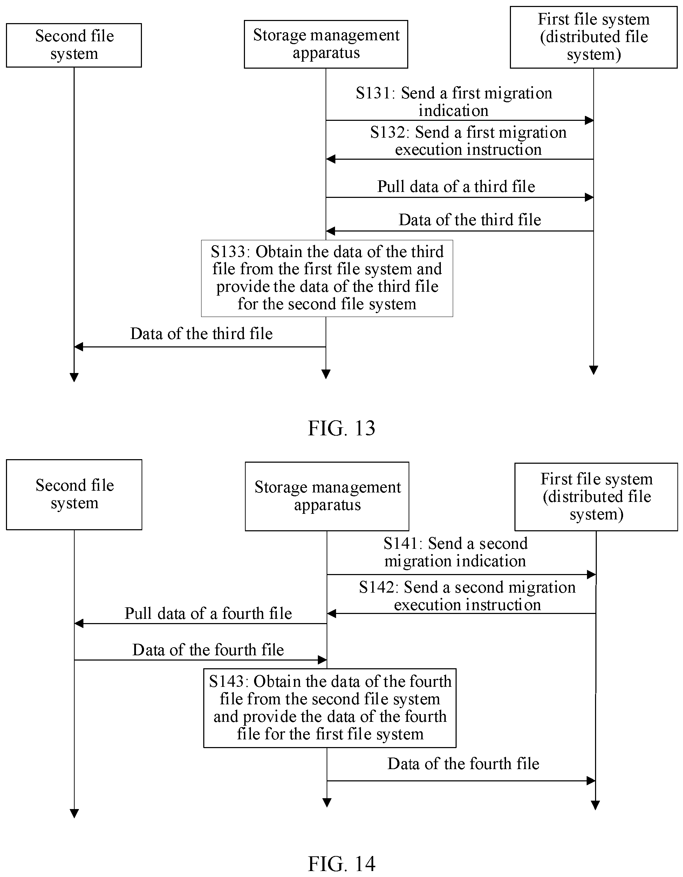

FIG. 13 is a diagram of a data flow process according to an embodiment of this application. The data flow process includes one or more steps of step S131 to step S133. Details are as follows.

Step S131: A storage management apparatus sends a first migration indication to a first file system. The first migration indication indicates to migrate out data of a third file that is stored in and belongs to the first file system. Optionally, the first migration indication may include an identifier of a second file system, to indicate to migrate the data of the third file to the second file system.

Optionally, the first migration indication includes an identifier of the third file, for example, an inode number, a path, or an address.

Optionally, the first migration indication is generated based on a migration policy, and the migration policy is, for example, delivered by a data management apparatus.

It should be understood that step S131 is an optional step, to be specific, in some cases, data migration may be triggered when step S131 is not performed.

Step S132: The storage management apparatus receives a first migration execution instruction from the first file system.

Step S133: The storage management apparatus obtains the data of the third file from the first file system and provides the data of the third file to the second file system.

For example, step S133 may be performed by a copy module in the storage management apparatus. In the embodiment shown in FIG. 13, data that belongs to the first file system may be migrated to the second file system, so that data migration between the first file system and another file system is implemented, and more selection directions are provided for evolution of the first file system. From a perspective of a user, the foregoing implementation satisfies a requirement for jointly managing, in a unified manner, the first file system and the second file system, and improves user experience.

FIG. 14 is a diagram of a data flow process according to an embodiment of this application, including step S141 to step S144. Details are as follows.

Step S141: A storage management apparatus sends a second migration indication to a first file system.

The second migration indication indicates to migrate, to the first file system, data of a fourth file that is stored in a second file system.

Optionally, the second migration indication includes an identifier of the fourth file, for example, an inode number, a path, or an address.

Optionally, the second migration indication is generated based on a migration policy, and the migration policy is, for example, delivered by a data management apparatus.

It should be understood that step S141 is an optional step.

Step S142: The storage management apparatus receives a second migration execution instruction from the first file system.

Step S143: The storage management apparatus obtains the data of the fourth file from the second file system and provides the data of the fourth file to the first file system.

For example, step S143 may be performed by a copy module in the storage management apparatus. In the embodiment shown in FIG. 14, data that is stored in the first file system and belongs to the first file system may be migrated to the first file system, to implement data migration between the first file system and another file system, provide more data layout possibilities for a storage system that includes a plurality of file systems, and improve user experience for a user.

To implement the method in embodiments of this application, the following provides an apparatus in embodiments of this application.

It may be understood that, to implement the functions in the foregoing method embodiments, a plurality of apparatuses provided in embodiments of this application, for example, a data processing apparatus, include a corresponding hardware structure, a software unit, or a combination of a hardware structure and a software structure for performing the functions.

A person skilled in the art should easily be aware that, units and algorithm steps of the examples described in embodiments disclosed in this specification may be implemented by hardware or a combination of hardware and computer software. Whether a function is performed by hardware or hardware driven by computer software depends on particular applications and design constraints of the technical solutions. A person skilled in the art may implement the foregoing method embodiments by using different apparatus implementations in different use scenarios. It should not be considered that different implementations of the apparatus go beyond the scope of embodiments of this application.

In embodiments of this application, the apparatus may be divided into functional modules. For example, functional modules may be obtained through division in correspondence to functions, or two or more functions may be integrated into one functional module. The integrated module may be implemented in a form of hardware, or may be implemented in a form of a software functional module. It should be noted that, in embodiments of this application, module division is an example, and is merely logical function division. In actual implementation, another division manner may be used.

FIG. 15 is a diagram of a structure of a storage management apparatus according to an embodiment of this application. The storage management apparatus 20 includes a metadata management module 201 and a data flow module 202. The metadata management module 201 is configured to implement a metadata-related operation, including but not limited to one or more of obtaining metadata, storing metadata, maintaining metadata, providing metadata, updating metadata, submitting a metadata change, converting a metadata format, or establishing a data view. The data flow module 202 is configured to cause data that belongs to a first file system to flow between a first file system and a second file system, including but not limited to one or more of initiating a data I/O request, receiving a data migration instruction, initiating a data migration indication, and executing a data copy.

The storage management apparatus is configured to implement the foregoing data management method, and includes the method shown in one or more embodiments and any optional implementation thereof in FIG. 6 to FIG. 14.

For example, the data flow module 202 may include a copy module 2021 and/or an LFS adaptation module 2022. The copy module 2021 is configured to migrate data, for example, respond to a migration instruction. The LFS adaptation module 2022 is configured to initiate an I/O request, a migration request, or the like in a data access process to implement data access and/or trigger data migration.

In a possible implementation, the metadata management module 201 is configured to obtain metadata of the first file system from the first file system and provide the metadata of the first file system to the second file system, and the data flow module 202 is configured to cause data that belongs to the first file system to flow between the first file system and the second file system through a storage interface provided by the first file system. The first file system is a distributed file system.

Optionally, the first file system and the second file system are heterogeneous file systems. Or optionally, the first file system and the second file system are homogeneous file systems.

In a possible implementation, the metadata of the first file system is used to generate a view of the first file system in the second file system.

In a possible implementation, the metadata management module 201 is further configured to: convert a format of the metadata of the first file system, and provide, for the second file system, the metadata of the first file system obtained after format conversion. A format of the metadata of the first file system obtained after the format conversion may be identified by the second file system, or may be the same as a format of metadata of the second file system.

In a possible implementation, the metadata management module 201 is further configured to obtain the metadata of the first file system through the storage interface provided by the first file system. In a possible implementation, the metadata management module 201 is further configured to obtain change metadata of the first file system.

In a possible implementation, the data flow module 202 is further configured to: receive a first data flow request from the second file system, and in response to the first data flow request, access file data in the first file system through the storage interface. Further, the data flow module 201 is further configured to feed back an access result to the second file system.

In a possible implementation, the data flow module 202 is further configured to read the data of the first file from the first file system through the storage interface, and provide the data of the first file to the second file system.

In a possible implementation, the data flow module 202 is further configured to write data of a fifth file to the first file system through the storage interface. Further, the data flow module 202 is further configured to receive a write result fed back by the first file system, and feed back the write result to the second file system.

In a possible implementation, the metadata management module 201 is further configured to: receive a first metadata update request from the second file system; and in response to the first metadata update request, submit a second metadata update request to the first file system through the storage interface.

Further, the metadata management module 201 is further configured to feed back a metadata update result to the second file system.

In a possible implementation, the data flow module 202 is further configured to intercept migration from the first file system.

In a possible implementation, the metadata management module 201 is further configured to record a change in metadata of a second file in the locally stored metadata of the first file system. In a possible implementation, the data flow module 202 is further configured to receive a second data flow request from the first file system; and in response to the second data flow request, obtain data of the second file from the second file system, and provide the data of the second file to the first file system through the storage interface, to enable a client of the first file system to obtain the data of the second file. The second data flow request is triggered when the client of the first file system accesses the second file.

In a possible implementation, the data flow module 202 is further configured to: send a first migration indication to the first file system through the storage interface; receive a first migration execution instruction from the first file system; and in response to the first migration execution instruction, obtain data of a third file from the first file system and provide the data of the third file to the second file system.

In a possible implementation, the data flow module 202 is further configured to: send a second migration indication to the first file system through the storage interface; receive a second migration execution instruction from the first file system; and in response to the second migration execution instruction, obtain data of a fourth file from the second file system and provide the data of the fourth file to the first file system.

In a possible implementation, the storage management apparatus further includes a GFS access module 204 (for example, the GFS source 203 shown in FIG. 4), and the GFS access module is configured to access a GFS by using the storage management apparatus and the first file system as a source file system.

When the second file system is the GFS or the second file system is a file system in the GFS, the foregoing metadata flow and data flow processes of the second file system may pass through the GFS access module 204.

In a possible implementation, the storage management apparatus 20 is further connected to a data management apparatus, to receive a migration (including tiering) policy from the data management apparatus.

In a possible implementation, the data flow module 202 is further configured to receive the migration policy from the data management apparatus, and generate a migration indication based on the migration policy.

FIG. 16 is a diagram of a structure of a compute device according to an embodiment of this application. The compute device 50 is a device having a computing capability. The device herein may be a physical device, for example, a controller, a processor, a server (for example, a rack server), or a host, or may be a virtual device, for example, a virtual machine or a container.

As shown in FIG. 16, the compute device 50 includes a processor 502 and a memory 501, and optionally includes a bus 504 and a communication interface 503. The processor 502 communicates with the memory 501 and the like through the bus 504. It should be understood that quantities of processors and memories in the compute device 50 are not limited in this application. The memory 501 is configured to provide storage space. The storage space may optionally store application data, user data, an operating system, a computer program, and the like. The memory 501 may include a volatile memory (volatile memory), for example, a random access memory (random access memory, RAM). The memory 501 may further include a non-volatile memory (non-volatile memory), for example, a read-only memory (read-only memory, ROM), a flash memory, a hard disk drive (hard disk drive, HDD), or a solid-state drive (solid-state drive, SSD). The processor 502 is a module for performing an operation, and may include any one or more of a controller (for example, a storage controller), a central processing unit (central processing unit, CPU), a micro graphics processing unit (graphics processing unit, GPU), a microprocessor (microprocessor, MP), a digital signal processor (digital signal processor, DSP), a coprocessor (assisting the central processing unit in completing corresponding processing and application), an application-specific integrated circuit (Application-Specific Integrated Circuit, ASIC), a microcontroller unit (Microcontroller Unit, MCU), a virtual machine, a container, and the like.

The communication interface 503 may be configured to provide an information input or output for the at least one processor; and/or the communication interface 503 may be configured to receive data sent externally and/or send data to the outside. The communication interface 503 may be a wired link interface including, for example, an ethernet cable, or may be a wireless link (Wi-Fi, Bluetooth, universal wireless transmission, or another wireless communication technology) interface. Optionally, the communication interface 503 may further include a transmitter (for example, a radio frequency transmitter or an antenna), a receiver, or the like that is coupled to the interface.

The bus 504 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 16, but this does not mean that there is only one bus or only one type of bus. The bus 504 may include a path for transmitting information between components (for example, the memory 501, the processor 502, and the communication interface 503) of the compute device 50.

In this embodiment of this application, the memory 501 stores executable instructions, and the processor 502 executes the executable instructions to implement the foregoing storage management method, for example, the method shown in one or more embodiments and any optional implementation thereof in FIG. 6 to FIG. 14, for example, perform the method performed by the storage management apparatus, and/or perform the method performed by the second file system. In other words, the memory 501 stores instructions used to perform the storage management method.

An embodiment of this application further provides a compute device cluster. The compute device cluster includes at least one compute device 50. Each compute device 50 includes a processor 502 and a memory 501. The processor 502 of the at least one compute device 50 is configured to execute instructions stored in the memory 501 of the at least one compute device 50, to enable the compute device cluster to implement the foregoing storage management method, for example, the method shown in one or more embodiments and any optional implementation thereof in FIG. 6 to FIG. 14, for example, implement the method performed by the storage management apparatus, and/or perform the method performed by the second file system.

An embodiment of this application further provides a storage device. The storage device includes a storage disk and the storage management apparatus shown in FIG. 15 or the compute device shown in FIG. 16. The storage disk is configured to provide storage space. The storage management apparatus or the compute device is configured to implement the foregoing storage management method, for example, the method shown in one or more embodiments and any optional implementation thereof in FIG. 6 to FIG. 14, for example, implement the method executed by the storage management apparatus, and/or execute the method executed by the second file system.

An embodiment of this application further provides a storage device. The storage device includes a storage disk and a compute device. The storage disk is configured to provide storage space, and the compute device is configured to access a GFS. Optionally, a second file system is deployed in the storage device. For example, the storage device may be the storage device 40 shown in FIG. 4, and a file system deployed in the storage device 40 is, for example, a file system F1. Certainly, the file system F1 may be replaced with another file system, for example, an S3, an OBS, or a distributed file system.

In some scenarios, the storage device may be a storage product provided by a storage vendor. For example, the storage device may include a storage product Dorado or Pacific provided by Huawei. An embodiment of this application further provides a computer-readable storage medium. The computer-readable storage medium stores instructions. When the instructions run on at least one processor (or a computing apparatus), the foregoing storage management method is implemented, for example, the method shown in one or more embodiments and any optional implementation thereof in FIG. 6 to FIG. 14, for example, the method performed by the storage management apparatus is implemented, and/or the method performed by the second file system is performed.

An embodiment of this application further provides a computer program product. The computer program product includes computer instructions. The computing instructions are used to implement the foregoing storage management method, for example, the method shown in one or more embodiments and any optional implementation thereof in FIG. 6 to FIG. 14, for example, implement the method performed by the storage management apparatus, and/or perform the method performed by the second file system.

In embodiments of this application, the term "example", "for example", or the like is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one of the following items (pieces)" or a similar expression thereof means any combination of these items, including a singular item (piece) or any combination of plural items (pieces). For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For another example, a first file and a second file are merely used to describe files in a specific implementation, and do not indicate differences in importance, data content, and the like of the files. In some cases, the first file and the second file may be a same file.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

## Claims

1. A storage management method, wherein the method comprises:
obtaining metadata of a first file system from the first file system, wherein the first file system is a distributed file system; and
providing the metadata of the first file system to a second file system, and causing data that belongs to the first file system to flow between the first file system and the second file system through a storage interface provided by the first file system, to enable a client of the second file system to access the data that belongs to the first file system by using the second file system.

2. The method according to claim 1, wherein the second file system and the first file system are heterogeneous file systems.

3. The method according to claim 1 or 2, wherein the metadata of the first file system is used to generate a view of the first file system in the second file system.

4. The method according to any one of claims 1 to 3, wherein the first file system comprises at least one of the following file systems: a Lustre file system, a general parallel file system GPFS, or an HDFS.

5. The method according to any one of claims 1 to 4, wherein the obtaining the metadata of the first file system from the first file system comprises:
obtaining the metadata of the first file system through the storage interface provided by the first file system.

6. The method according to claim 5, wherein the obtaining the metadata of the first file system through the storage interface provided by the first file system comprises:
scanning baseline metadata of the first file system through the storage interface provided by the first file system, to obtain the metadata of the first file system.

7. The method according to any one of claims 1 to 5, wherein the obtaining the metadata of the first file system from the first file system comprises:
obtaining change metadata of the first file system, wherein the change metadata is metadata added by the first file system in a time period, and the metadata of the first file system comprises the change metadata.

8. The method according to any one of claims 1 to 7, wherein the causing file data in the first file system to flow between the first file system and the second file system through the storage interface provided by the first file system comprises:
receiving a first data flow request from the second file system, wherein the first data flow request is triggered when the client of the second file system accesses, by using the second file system, the file that belongs to the first file system; and
in response to the first data flow request, accessing the file data in the first file system through the storage interface, and feeding back an access result to the second file system, to enable the second file system to feed back the access result to the client of the second file system.

9. The method according to claim 8, wherein the first data flow request is triggered when the client of the second file system reads, by using the second file system, data of a first file that belongs to the first file system, and the data of the first file is stored in the first file system; and
the accessing the file data in the first file system through the storage interface, and feeding back the access result to the second file system comprises:
reading the data of the first file from the first file system through the storage interface, and providing the data of the first file to the second file system.

10. The method according to claim 9, wherein the method further comprises:
receiving a first metadata update request from the second file system, wherein the first metadata update request is triggered when the client of the second file system writes a second file by using the second file system, and the second file belongs to the first file system; and
in response to the first metadata update request, submitting a second metadata update request to the first file system through the storage interface, wherein the second metadata update request comprises updated metadata of the second file, wherein
data of the second file remains stored in the second file system after metadata of the second file is updated.

11. The method according to claim 10, wherein the method is applied to a storage management apparatus, the storage management apparatus is further configured to store the metadata of the first file system, and the method further comprises:
recording a change in the metadata of the second file in the locally stored metadata of the first file system.

12. The method according to claim 10 or 11, wherein the causing the file data in the first file system to flow between the first file system and the second file system through the storage interface provided by the first file system further comprises:
receiving a second data flow request from the first file system, wherein the second data flow request is triggered when a client of the first file system accesses the second file; and
in response to the second data flow request, obtaining the data of the second file from the second file system, and providing the data of the second file to the first file system through the storage interface, to enable the client of the first file system to obtain the data of the second file.

13. The method according to any one of claims 1 to 12, wherein the causing the file data in the first file system to flow between the first file system and the second file system through the storage interface provided by the first file system comprises:
sending a first migration indication to the first file system through the storage interface, wherein the first migration indication indicates to migrate out data of a third file that is stored in and belongs to the first file system;
receiving a first migration execution instruction from the first file system; and
in response to the first migration execution instruction, obtaining the data of the third file from the first file system and providing the data of the third file to the second file system.

14. The method according to any one of claims 1 to 13, wherein the causing the file data in the first file system to flow between the first file system and the second file system through the storage interface provided by the first file system comprises:
sending a second migration indication to the first file system through the storage interface, wherein the second migration indication indicates to migrate, to the first file system, data of a fourth file that is stored in the second file system;
receiving a second migration execution instruction from the first file system; and
in response to the second migration execution instruction, obtaining the data of the fourth file from the second file system and providing the data of the fourth file to the first file system.

15. The method according to any one of claims 1 to 14, wherein the method further comprises:
receiving a migration policy from a data management apparatus, wherein the data management apparatus is connected to the second file system; and
generating a migration indication based on the migration policy, to trigger data flow between the first file system and the target file.

16. A storage system, wherein the storage system comprises a second file system, a storage management apparatus, and a first file system;
the first file system is a distributed file system, the first file system comprises a first storage apparatus and a metadata management apparatus, the first storage apparatus is configured to provide storage space for a file in the first file system, and the metadata management apparatus is configured to manage metadata of the first file system;
the second file system comprises a second storage apparatus, and the second storage apparatus is configured to provide storage space for the file in the first file system; and
the storage management apparatus is configured to implement the storage management method according to any one of claims 1 to 15.

17. The storage system according to claim 16, wherein the second file system is configured to:
receive an access request of a client of the second file system for the file that belongs to the first file system;
generate a first data flow request and send the first data flow request to the storage management apparatus; and
receive an access result from the storage management apparatus, and feed back the access result to the client of the second file system.

18. The storage system according to claim 17, wherein the access request for the file that belongs to the first file system comprises a read request for data of a first file that belongs to the first file system, and the data of the first file is stored in the first file system; and
the access result comprises the data of the first file.

19. The storage system according to claim 17, wherein the second file system is further configured to:
receive a write request of the client of the second file system for a second file that belongs to the first file system, wherein the write request comprises data of the second file;
write the data of the second file to the second file system; and
send a first metadata update request to the storage management apparatus, wherein the first metadata update request comprises updated metadata of the second file.

20. A storage management apparatus, wherein the storage management apparatus comprises a metadata management module and a data flow module;
the metadata management module is configured to obtain and provide metadata;
the data flow module is configured to cause data to flow between a first file system and a second file system; and
the storage management apparatus is configured to implement the method according to any one of claims 1 to 15.

21. A compute device, wherein the compute device comprises a processor and a memory; and
the memory stores computer instructions, and the processor is configured to invoke the computer instructions stored in the memory, to implement the method according to any one of claims 1 to 15.

22. A computer-readable storage medium, wherein the computer-readable storage medium stores computer program instructions, and when the computer program instructions are executed by a processor, the method according to any one of claims 1 to 15 is implemented.

23. A computer program product, wherein the computer program product comprises computer program instructions, and when the computer program instructions are executed by a processor, the method according to any one of claims 1 to 5 is implemented.
